# EUROPEAN PATENT APPLICATION

(11) **EP 4 814 477 A1**
(43) Date of publication of application: **30.09.2026**
(21) Application number: 26161614.8
(22) Date of filing: 02.03.2026
(51) Int. Cl.: G01N 21/64, G01N 15/14, G01N 15/149, G01N 15/1429, G01N 15/1434, G01N 21/47, G01N 15/10

(54) **LIGHT DETECTION SYSTEMS FOR SMALL PARTICLE DETECTION AND METHODS OF USE THEREOF**

(30) Priority: 25.03.2025 US 202519089609
(71) Applicant: Waters Technologies Corporation, Milford, MA 01757 (US)
(72) Inventor: WU, Austin, San Jose, 95120 (US); ZOU, Jizuo, San Jose, 95124 (US); SIMON, Julius Steven, Danville, 94506 (US); WELSH, Joshua Aden, Walnut Creek, 94597 (US)
(74) Representative: v. Bezold & Partner Patentanwälte - PartG mbB

(57) **Abstract**

Aspects of the invention include light detection systems for small particle detection. Light detection systems according to the invention comprise: an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell; a clustered wavelength division (CWD) light detection subsystem comprising a first light receiver configured to convey the first beam of light to a first light detection module and a second light receiver configured to convey the second beam of light to a second light detection module, wherein the first light detection module comprises a small particle detector; a first optical fiber configured to convey the first beam of light from the optical adjustment component to the first light receiver of the CWD light detection subsystem; and a second optical fiber configured to convey the second beam of light from the optical adjustment component to the second light receiver of the CWD light detection subsystem. In embodiments, the optical adjustment component comprises a beam splitter or a multimodal notch filter. Methods and kits are also provided.

## Description

### CROSS-REFERENCE TO RELATED APPLICATION

This application claims priority to the filing date of United States Patent Application Serial No. 19/089,609 filed March 25, 2025, the disclosure of which application is incorporated herein by reference in its entirety.

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

The parameters measured using a flow cytometer (i.e., a particle analyzer) typically include light at the excitation wavelength scattered by the particle in a narrow angle along a mostly forward direction, referred to as forward-scatter (FSC), the excitation light that is scattered by the particle in an orthogonal direction to the excitation laser, referred to as side-scatter (SSC), and the light emitted from fluorescent molecules or fluorescent dye. Different particle types can be identified by their light scatter characteristics and fluorescence emissions resulting from labeling various proteins (e.g., cell proteins) or other constituents with fluorescent dye-labeled antibodies or other fluorescent probes. Forward-scattered light, side-scattered light and fluorescent light is detected by photodetectors that are positioned within the flow cytometer.

The development of clustered wavelength division (CWD) light detection systems-such as those described in U.S. Application No. 17/870,187 and U.S. Application No. 17/159,453, each incorporated by reference herein in their entirety-has recently led to improvements in the quality of light collection in flow cytometers. CWD systems include wavelength separators that pass light having a predetermined spectral range, as well as light detection modules in optical communication with each wavelength separator. Each light detection module includes a plurality of photodetectors and one or more optical components configured to convey light having a predetermined sub-spectral range to the photodetectors. Accordingly, CWD systems separate collected light into spectral ranges and require fewer reflections of the light in order to generate a plurality of sub-spectral ranges detected by photodetectors. Because reflections that generate distinct spectral ranges of light result in light loss-in certain instances causing poor detector signal quality (e.g., low signal to noise ratio)-the reduction of reflections in CWD systems reduces the amount of light loss and improve signal quality.

Utilizing flow cytometry techniques for small particle light detection is also of interest. However, detection of small particle light is challenging due to the reduced signal associated with small particles and the commensurate sensitivity to noise. Small particle detection requires highly sensitive light detection within a context of systems able to provide high signal to noise ratios.

### SUMMARY

The inventors have realized there remains a need for further improvements in light detection systems that comprise or utilize CWD light detection systems, such as, for example, improvements in the ability of such systems to detect, analyze and/or characterize light scattered by small particles, as described herein. The inventors have discovered that utilizing highly sensitive photodetectors in conjunction with CWD light detection subsystems would be desirable, enabling CWD light detection subsystems to be used in conjunction with small particle detection. The inventors have further discovered that utilizing optical fibers to optically convey light originating from a flow cell of a flow cytometer to one or more CWD light detection subsystems enables such CWD light detection subsystems to be used in conjunction with small particle detection, i.e., by reducing light loss or the introduction to noise, in particular in relation to highly sensitive signals arising from small particle light scatter.

By "small particles," it is meant any particle not capable of detection and analysis using traditional light scatter approaches. Small particles of interest include particles as small as 90 nm or smaller, such as 80 nm or smaller, such as 70 nm or smaller, such as 60 nm or smaller, such as 50 nm or smaller, such as 40 nm or smaller. Examples of small particles of interest include, but are not limited to, apoptotic bodies, with sizes ranging from, e.g., 500 to 2,000 nm, platelets, chylomicrons, with sizes ranging from, e.g., 75 to 1,200 nm, microvesicles, with sizes ranging from, e.g., 50 to 1,000 nm, certain bacteria, exosomes, with sizes ranging from, e.g., 40 to 160 nm, certain viruses, certain exomers, with sizes of approximately 35 nm, or certain lipoproteins (HDL, LDL, VLDL), with sizes ranging from, e.g., 5 to 80 nm.

Small particle light scatter detection is unique and different from fluorescent detection, traditionally. While for large particles the light scatter signal is typically orders of magnitude higher than the fluorescence signal, light scatter for small particles decreases according to the radius of the particle raised to the sixth power, resulting in fewer photons scattered compared to fluorescent techniques. High-sensitivity light scatter detection, as in embodiments of the disclosure, therefore requires optical filtering and specialized detectors to improve sensitivity and resolution. Embodiments of the disclosure demonstrate systems and methods for collecting scattered light at an independent focal plane, having the option to share or not share a fluorescent (FL) optical path, and reconverging within a CWD light detection subsystem (also referred to as a Pizza detection system) at a light detection module (also referred to as a B block) with independent optical elements to be detected with a shared low cost array, e.g., avalanche photodiode photodetectors (APD detectors). Furthermore, embodiments of the light detection module design imparts mechano-optical flexibility to further combine/split/attenuate/filter or focus a specific scattering channel. This ability enables light scatter calibration for both small particles and larger particles, e.g., a cell, resulting in improved standardization. This approach of sharing the same collection aperture, as in embodiments of the present invention, also enables integration of signals from both detectors to create a single larger dynamic range detection channel.

Embodiments of the disclosure offer various advantages over existing techniques, including, for example: (1) separation of fluorescence and light scatter paths from a single continuous light scatter channel aperture using an optical adjustment component, such as, for example, a beam splitter or a multi-modal notch filter (i.e., where such aperture is upstream of the optical adjustment component), enables integration of signals from multiple detectors, such as a small particle detector and a side scatter detector, to create a single larger dynamic range detection channel; such separation of fluorescence and light scatter paths using an optical component also allows independent alignment and/or calibration to enable high-sensitivity light scatter detection without deprecating fluorescent sensitivity due chromatic aberration and further imparts mechano-optical flexibility to further combine, split, attenuate, filter and/or focus a specific scattering channel; (2) the optical adjustment component of embodiments may be field upgradable, i.e., such components may be swapped out after the system is deployed (e.g., delivered to a customer), including, for example, swapping a first multi-modal notch filter for a second multi-modal notch filter with different light-transmission characteristics or for a beam splitter, for example; (3) collection of small particle and separated light scatter directly on to pin-holes/fibers (i.e., first and second optical fibers, as described herein) allows increased signal-to-noise and light transmission to detectors in a modular fashion, reducing complexity and/or cost while enabling multi-modal light scatter collection, rather than only a single mode; (4) a 90 degree fiber bend simplifies or eliminates any need for an aperture-fiber-mirror assembly; and (5) collection of the same wavelength through the same aperture and separated downstream, as in embodiments of the disclosure (i.e., where such aperture is upstream of the optical adjustment component), enables light scatter calibration across detectors enabling a single continuous light scatter channel to be utilized.

Embodiments of the disclosure may achieve such advantages by employing an optical adjustment component, such as, for example a beam splitter or a multi-modal notch filter. In such embodiments, the optical adjustment component is configured to split a beam of light received from a flow cell into first and second beams of light, wherein the first beam of light comprises a light scattered from a particle excited within the flow cell, and wherein the second beam of light comprises a fluorescence of the particle excited within the flow cell. Other embodiments of the disclosure may achieve such advantages by configuring a system such that an aperture to receive light emitted from a flow cell is present upstream of the optical adjustment component. Still other embodiments of the disclosure may achieve such advantages by employing combinations of 800 micrometer fiber (for fluorescent (FL) signal) with a 200 micrometer aperture, or, in an improved alternative, by employing a 90 degree 200 micrometer fiber to simplify parts and allows independent optical path, while increasing the signal-to-noise ratio. Embodiments may utilize multiple fibers to enable multi-modal light scatter collection. Embodiments may utilize a single 800 micrometer fiber directed to side scatter and small particle detection at the same Z focal plane, which approach enables 80 nm performance using a fluorescent (FL) optical path only. Still other approaches entail a single channel detector at a condenser lens (i.e., without a CWD light detection subsystem-technique, similar to certain existing techniques). As discussed herein, certain embodiments of the disclosure are capable of 80 nm resolution using avalanche photodiodes and without the use of a more sensitive detector.

Aspects of the invention include light detection systems for small particle detection. Light detection systems according to the invention comprise: an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell; a clustered wavelength division (CWD) light detection subsystem comprising a first light receiver configured to convey the first beam of light to a first light detection module and a second light receiver configured to convey the second beam of light to a second light detection module, wherein the first light detection module comprises a small particle detector; a first optical fiber configured to convey the first beam of light from the optical adjustment component to the first light receiver of the CWD light detection subsystem; and a second optical fiber configured to convey the second beam of light from the optical adjustment component to the second light receiver of the CWD light detection subsystem. In embodiments, the optical adjustment component comprises a beam splitter or a multi-modal notch filter.

Aspects of the invention further include a small particle light detection module of a clustered wavelength division (CWD) light detection subsystem, the small particle light detection module comprising: a small particle detector, wherein the small particle light detection module is configured to receive a beam of light from a light receiver. In embodiments, the small particle light detection module further comprises a side scatter detector. Aspects of the invention additionally include methods for practicing the invention as well as kits having components of the light detection systems.

### BRIEF DESCRIPTION OF THE FIGURES

The disclosure may be best understood from the following detailed description when read in conjunction with the accompanying drawings. Included in the drawings are the following figures:
**FIGS. 1A-G** depict different views of light detection systems and aspects thereof according to certain embodiments.
**FIG. 2** presents a flow cytometric system according to certain embodiments.
**FIG. 3** depicts an image-enabled particle sorter according to certain embodiments.
**FIG. 4** depicts a functional block diagram of a particle analysis system according to certain embodiments.
**FIG. 5** depicts a depicts a functional block diagram for one example of a control system according to certain embodiments.
**FIG. 6A-6B** depict schematic drawings of a particle sorter system according to certain embodiments.
**FIG. 7** depicts aspects of a computer-controlled system according to certain embodiments.
**FIG. 8** depicts theoretical results related to detecting small particles using embodiments of the present disclosure.
**FIG. 9** depicts empirical results comparing performance of a certain system against an embodiment according to the present disclosure.

### DETAILED DESCRIPTION

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### DEVICE/SYSTEM SECTION

Aspects of the invention include an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell; a clustered wavelength division (CWD) light detection subsystem comprising a first light receiver configured to convey the first beam of light to a first light detection module and a second light receiver configured to convey the second beam of light to a second light detection module, wherein the first light detection module comprises a small particle detector; a first optical fiber configured to convey the first beam of light from the optical adjustment component to the first light receiver of the CWD light detection subsystem; and a second optical fiber configured to convey the second beam of light from the optical adjustment component to the second light receiver of the CWD light detection subsystem.

### Optical adjustment component:

Aspects of the present invention include an optical adjustment component configured to split a beam of light received from a flow cell into first and second beams of light. In embodiments, the first beam of light comprises a light scattered from a particle excited within the flow cell, and the second beam of light comprises a fluorescence of the particle excited within the flow cell. Embodiments include an optical adjustment component configured to receive a light beam originating from a flow cell and convey a first beam of light, comprising a light scattered from a particle excited within the flow cell, to a first optical fiber and a second beam of light, comprising a fluorescence of the particle excited within the flow cell, to a second optical fiber. The term "optical adjustment" is used herein in its conventional sense to refer to an optical component that changes or adjusts light that is propagated to the light scatter detector and the brightfield photodetector. For example, the optical adjustment may be to change the profile of the light beam, the focus of the light beam, the direction of beam propagation or to collimate the light beam. As described herein, in certain embodiments, optical adjustment includes splitting the beam of light such that part of the collected light (e.g., from a sample in a flow stream) is propagated to the first optical fiber and another part of the collected light is propagated to the second optical fiber. In certain embodiments, the optical adjustment component comprises a beam splitter or a multi-modal notch filter.

As described herein, light propagated to the first optical fiber (and ultimately to the small particle detector) in the subject light detection systems comprises a light scattered from a particle excited within the flow cell. Further, the amount of light propagated to the first optical fiber (and ultimately to the small particle detector) in the subject light detection systems may vary, where in some embodiments 50% or less of the collected light is conveyed to the first optical fiber through the optical adjustment component, such as 45% or less, such as 40% or less, such as 35% or less, such as 30% or less, such as 25% or less, such as 20% or less, such as 15% or less, such as 10% or less and including 5% or less of the light collected by the light detection system is conveyed to the first optical fiber through the optical adjustment component. For example, the amount of collected light (e.g., from a sample in a flow stream) that is propagated through the optical adjustment component to the first optical fiber may range from 1% to 75%, such as from 2% to 70%, such as from 3% to 65%, such as from 4% to 60% and including from 5% to 50%.

As described herein, light propagated to the second optical fiber in the subject light detection systems comprises a fluorescence of the particle excited within the flow cell. Further, the amount of light propagated to the second optical fiber through the optical adjustment component may also vary, where in some embodiments, 50% or more of the collected light is conveyed to the second optical fiber, such as 55% or more, such as 60% or more, such as 65% or more, such as 75% or more, such as 80% or more, such as 90% or more and including 95% or more of the light collected by the subject light detection system is conveyed to the second optical fiber through the optical adjustment component. For example, the amount of light propagated to the second optical fiber through the optical adjustment component may range from 25% to 99%, such as from 30% to 95%, such as from 35% to 90%, such as from 40% to 85%, such as from 45% to 80% and including from 50% to 75%. In certain embodiments, 10% of the collected light is propagated to the first optical fiber and 90% of the collected light is propagated to the second optical fiber.

In some embodiments, light from the optical adjustment component is propagated through an obscuration component to the first optical fiber. In these embodiments, the obscuration component is configured to reduce the amount of light that is conveyed to the first optical fiber, such as reducing the amount of light that is conveyed to the first optical fiber by 1% or more, such as by 5% or more, such as by 10% or more, such as by 25% or more, such as by 40% or more and including reducing the amount of light that is conveyed to the first optical fiber by 50% or more. Any convenient obscuration protocol may be employed, including but not limited to optical apertures (e.g., pinholes) or slits. The size of the optical aperture may vary as desired, where apertures of interest range from 0.001 mm to 10 mm, such as from 0.005 mm to 9.5 mm, such as from 0.01 mm to 9 mm, such as from 0.05 mm to 8.5 mm, such as from 0.1 mm to 8 mm, such as from 0.5 mm to 7.5 mm and including from 1 mm to 5 mm. Obscuration slits of interest may also vary where the width of the slit ranges from 0.001 mm to 10 mm, such as from 0.005 mm to 9.5 mm, such as from 0.01 mm to 9 mm, such as from 0.05 mm to 8.5 mm, such as from 0.1 mm to 8 mm, such as from 0.5 mm to 7.5 mm and including from 1 mm to 5 mm. The length of the obscuration slit may vary depending on the width of propagated light to the first optical fiber and may range from 1 mm to 50 mm, such as from 2 mm to 45 mm, such as from 3 mm to 40 mm, such as from 4 mm to 35 mm and including from 5 mm to 25 mm.

In certain embodiments, light is also propagated to the second optical fiber through one or more obscuration components, such as a scatter bar or an obscuration disc. The obscuration component employed to reduce the amount of light conveyed to the second optical fiber may be any convenient shape where cross-sectional shapes of interest include, but are not limited to rectilinear cross sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. In some embodiments, the obscuration component is a circle. In other embodiments, the obscuration component is an oval. In yet other embodiments, the obscuration component is polygonal-shaped, such as square-shaped or rectangular. The width of the obscuration component may vary, ranging in some instances from 1 mm to 25 mm, such as from 2 mm to 22 mm, such as from 3 mm to 20 mm, such as from 4 mm to 17 mm and including from 5 mm to 15 mm. The length of each obscuration component ranges from 1 mm to 50 mm, such as from 2 mm to 45 mm, such as from 3 mm to 40 mm, such as from 4 m to 35 mm, such as from 5 mm to 30 mm and including from 10 mm to 20 mm.

In some instances, optical adjustment of the collected light further includes collimating the light. The term "collimate" is used in its conventional sense to refer to the optically adjusting the collinearity of light propagation or reducing divergence by the light of from a common axis of propagation. In some instances, collimating includes narrowing the spatial cross section of a light beam. In other instances, optical adjustment includes changing the direction of the light beam, such as changing the propagation of the light beam by 1° or more, such as by 5° or more, such as by 10° or more, such as by 15° or more, such as by 20° or more, such as by 25° or more, such as by 30° or more, such as by 45° or more, such as by 60° or more, such as by 75° or more and including changing the direction of light propagation by 90° or more. In yet other instances, optical adjustment is a de-magnification protocol so as to decrease the dimensions of the light (e.g., beam spot), such as decreasing the dimensions by 5% or more, such as by 10% or more, such as by 25% or more, such as by 50% or more and including decreasing the dimensions by 75% or more.

The term "beam splitter" (or "beamsplitter") is used herein in its conventional sense to refer to an optical component that is configured to propagate a beam of light along two or more different optical paths, such that a predetermined portion of the light is propagated along each optical path. Any convenient light beam splitting protocol may be employed such as with triangular prism, slivered mirror prisms, dichroic mirror prisms, among other types of beam splitters. The beam splitter may be formed from any suitable material so long as the beam splitter is capable of propagating the desired amount and wavelengths of light to the first optical fiber and to the second optical fiber. For example, beam splitters of interest may be formed from glass (e.g., N-SF10, N-SF11, N-SF57, N-BK7, N-LAK21 or N-LAF35 glass), silica (e.g., fused silica), quartz, crystal (e.g., CaF₂ crystal), zinc selenide (ZnSe), F₂, germanium (Ge) titanate (e.g., S-TIH11), borosilicate (e.g., BK7). In certain embodiments, the beam splitter is formed from a polymeric material, such as, but not limited to, polycarbonates, polyvinyl chloride (PVC), polyurethanes, polyethers, polyamides, polyimides, or copolymers of these thermoplastics, such as PETG (glycol-modified polyethylene terephthalate), among other polymeric plastic materials. In certain embodiments, the beam splitter is formed from a polyester, where polyesters of interest may include, but are not limited to, poly(alkylene terephthalates) such as poly(ethylene terephthalate) (PET), bottle-grade PET (a copolymer made based on monoethylene glycol, terephthalic acid, and other comonomers such as isophthalic acid, cyclohexene dimethanol, etc.), poly(butylene terephthalate) (PBT), and poly(hexamethylene terephthalate); poly(alkylene adipates) such as poly(ethylene adipate), poly(1,4-butylene adipate), and poly(hexamethylene adipate); poly(alkylene suberates) such as poly(ethylene suberate); poly(alkylene sebacates) such as poly(ethylene sebacate); poly(ε-caprolactone) and poly(β-propiolactone); poly(alkylene isophthalates) such as poly(ethylene isophthalate); poly(alkylene 2,6-naphthalene-dicarboxylates) such as poly(ethylene 2,6-naphthalenedicarboxylate); poly(alkylene sulfonyl-4,4'-dibenzoates) such as poly(ethylene sulfonyl-4,4'-dibenzoate); poly(p-phenylene alkylene dicarboxylates) such as poly(p-phenylene ethylene dicarboxylates); poly(trans-1,4-cyclohexanediyl alkylene dicarboxylates) such as poly(trans-1,4-cyclohexanediyl ethylene dicarboxylate); poly(1,4-cyclohexanedimethylene alkylene dicarboxylates) such as poly(1,4-cyclohexane-dimethylene ethylene dicarboxylate); poly([2.2.2]-bicyclooctane-1,4-dimethylene alkylene dicarboxylates) such as poly([2.2.2]-bicyclooctane-1,4-dimethylene ethylene dicarboxylate); lactic acid polymers and copolymers such as (S)-polylactide, (R,S)-polylactide, poly(tetramethylglycolide), and poly(lactide-co-glycolide); and polycarbonates of bisphenol A, 3,3'-dimethylbisphenol A, 3,3',5,5'-tetrachlorobisphenol A, 3,3',5,5'-tetramethylbisphenol A; polyamides such as poly(p-phenylene terephthalamide); polyethylene Terephthalate (e.g., MylarTM Polyethylene Terephthalate), combinations thereof, and the like.

In certain embodiments, the beam splitter is a wedged beam splitter. In these embodiments, the beam splitter is a beam splitter having a wedge angle that produces non-collinear back reflection such that propagation of collected light through the wedged beamsplitter results in a small change in the angle of light propagated to one or more of the first optical fiber and second optical fiber. Wedged beam splitters according to embodiments of the present disclosure have a wedge angle where a change in the incident angle of collected light results in a deviation in the propagated light angle by 0.001% or more, such as by 0.005% or more, such as by 0.01% or more, such as by 0.05% or more, such as by 0.1% or more, such as by 0.5% or more, such as by 1% or more, such as by 2% or more, such as by 3% or more, such as by 5% or more and including by 10% or more. In some embodiments, the wedged beam splitter has a wedge angle of from 5 arc minute to 120 arc minute, such as from 10 arc minute to 115 arc minute, such as from 15 arc minute to 110 arc minute, such as from 20 arc minute to 105 arc minute, such as from 25 arc minute to 100 arc minute, such as from 30 arc minute to 105 arc minute, such as from 35 arc minute to 100 arc minute, such as from 40 arc minute to 95 arc minute and including from 45 arc minute to 90 arc minute. In certain embodiments, the wedged beam splitter has a wedge angle that is sufficient to reduce or eliminate light interference. In other embodiments, the wedged beam splitter has a wedge angle that is sufficient to reduce or eliminate image artifacts from the light, as ultimately sensed, measured or detected by a light detector, as described herein.

In some embodiments, the wedged beam splitter has a transparency window of from 150 nm to 5 µm; from 180 nm to 8 µm, from 185 nm to 2.1 µm, from 200 nm to 6 µm, from 200 nm to 11 µm, from 250 nm to 1.6 µm, from 350 nm to 2 µm, from 600 nm to 16 µm, from 1.2 µm to 8 µm, from 2 µm to 16 µm or some other wavelength range.

Beam splitters of interest may be configured to split the amount of light propagated to the first optical fiber and the second optical fiber as desired. In embodiments, the beam splitter may have a beam splitting light ratio between the first optical fiber and second optical fiber (or, from the second optical fiber and first optical fiber) of from 1:99 to 99:1, such as from 5:95 to 95:5, such as from 10:90 to 90:10, such as from 20:80 to 80:20, such as from 25:75 to 75:25 and including a beam splitting ratio of 50:50. In certain embodiments, the beam splitter is a 10:90 beamsplitter where 10% of light is propagated to the first optical fiber and 90% of light is propagated to the second optical fiber.

In some embodiments, spatial position of the beam splitter is adjustable, such as manually (by hand) or with a motor-driven displacement device. For example, the angle of the beam splitter may be adjusted in the subject light detection system by 1° or more, such as by 5° or more, such as by 10° or more, such as by 15° or more, such as by 20° or more, such as by 30° or more, such as by 45° or more, such as by 60° or more and including by 75° or more. In certain instances, the spatial position of the beam splitter can be adjusted in the light detection system, such as by 1 mm or more, such as by 5 mm or more, such as by 10 mm or more and including by 25 mm or more. Any convenient motor-driven actuator can be used, such as for example a motor actuated displacement stage, motor driven leadscrew assembly, motor-operated geared actuation device employing a stepper motor, servo motor, brushless electric motor, brushed DC motor, micro-step drive motor, high resolution stepper motor, among other types of motors. In one example, the horizontal or vertical position or the angle of orientation of the beam splitter can be adjusted with a motor-driven displacement device.

In embodiments, notch filters of interest include band-stop filters or band-rejection filters or other filters configured to pass most frequencies unaltered and remove or attenuate those frequencies in a specific range to very low levels. In embodiments, notch filters are band-pass filters with a narrow stopband. In embodiments, multi-modal notch filters are filters configured to remove or attenuate signals at multiple specific frequencies. That is, unlike standard notch filters that remove or attenuate singles at a single frequency (e.g., a contiguous frequency range), multi-modal notch filters remove or attenuate multiple frequencies (e.g., a collection of discontinuous frequency ranges). Multi-modal notch filters of interest comprise multiple notch filters, i.e., using multiple individual notch filters, each tuned to a specific frequency to be removed, or, in other cases, notch filters arranged in multiple stages, i.e., a series of filters, where each stage might focus on a different frequency range or type of interference. Multi-modal notch filters may comprise any convenient light separation protocol. In some cases, multi-modal notch filters comprise one or more notch filters. In other cases, multi-modal notch filters comprise one or more dichroic mirrors, bandpass filters, diffraction gratings, beam splitters or prisms. In some embodiments, the multi-modal notch filter comprises a prism. In other embodiments, the multi-modal notch filter comprises a diffraction grating. In certain embodiments, the multi-modal notch filter comprises a dichroic mirror.

Further details regarding aspects of subject light detection systems, including optical adjustment components, beam splitters or multi-modal notch filters, are described in United States Patent No. 10,976,236, the disclosure of which is herein incorporated by reference.

### Optical Fibers:

In embodiments, light receivers are configured to receive light traveling through an optical collection component. Optical collection components include, for example, fiber optics. In certain cases, the optical collection component includes a fiber optics relay bundle (e.g., multiple fiber optic components bundled together). In such instances, the optical collection component includes 2 or more fiber optics, such as 3 or more fiber optics, such as 4 or more fiber optics, such as 5 or more fiber optics, such as 6 or more fiber optics, such as 7 or more fiber optics, such as 8 or more fiber optics, such as 9 or more fiber optics, such as 10 or more fiber optics, such as 25 or more fiber optics, such as 50 or more fiber optics and including 100 or more fiber optics.

In embodiments, each light receiver is configured to receive light traveling through a single optical fiber, i.e., such that the first light receiver receives a first beam of light conveyed by a first optical fiber, and the second light receiver receives a second beam of light conveyed by a second optical fiber. Optical fibers of interest include commercially available optical fibers, such as optical fibers available from Thorlabs or Newport Corporation or FS Inc., for example. Optical fibers include a light transparent material. In some embodiments , the transparent material includes a glass material such as, but not limited to, silica (e.g., fused silica). In other embodiments, the transparent material includes a polymeric material. In such embodiments, the transparent material may include one or more materials such as, but not limited to, poly (methylmethacrylate) (PMMA), polystyrene, and poly (perfluoro-butenyl vinyl ether) (CYTOP).

The first and second optical fibers may either be the same type or different type of optical fibers. In embodiments, the diameter of the first optical fiber is smaller than the diameter of the second optical fiber. By "diameter of optical fiber," it is meant, for example, ultimately, an inner diameter of an optical fiber, such as a core diameter of an optical fiber, or a diameter of an optical fiber excluding a cladding or a buffer region. In instances, the diameter of the first optical fiber may be 95% or 90% or 85% or 80% or 75% or 70% or 65% or 60% or 55% or 50% or 45% or 40% or 35% or 30% or 25% or 20% or 15% or 10% or 5% or less of the diameter of the second optical fiber. Alternatively, for example, the diameter of the first optical fiber may be smaller than the diameter of the second optical fiber by 50 µm or 100 µm or 150 µm or 200 µm or 250 µm or 300 µm or 350 µm or 400 µm or 450 µm or 500 µm or 550 µm or 600 µm or 650 µm or 700 µm or 750 µm or 800 µm or 850 µm or 900 µm or 950 µm or 1,000 µm or more.

In embodiments, the first and second optical fibers may be single mode fibers. In other embodiments, the first and second optical fibers may multimode fibers. In still other embodiments, one optical fiber may be a single mode fiber and the other a multimode fiber. Optical fibers of interest include proximal and distal ends, where the proximal end receives light from the optical adjustment component and the distal end conveys light to a light receiver, such as either the first or second light receivers.

In embodiments, the first optical fiber is configured as an aperture for side scatter light or, in some cases, for small particle side scatter light. In some embodiments, the first optical fiber is configured as an aperture dimensioned for side scatter light or, in some cases, for small particle side scatter light. In certain embodiments, the diameter of the first optical fiber is configured as an aperture dimensioned for side scatter light or, in some cases, for small particle side scatter light. In embodiments, the first optical fiber is 200 µm optical fiber. For example, the first optical fiber has a diameter of 200 µm, such as, for example, a core diameter of 200 µm.

In embodiments, the first optical fiber is configured such that it includes a fiber bend, such as a 90-degree fiber bend or an 85 to 95 degree bend or an 80 to 100 degree bend or a 75 to 105 degree bend or a 70 to 110 degree bend or a 65 to 115 degree bend or a 60 to 120 degree bend. In some embodiments, the first optical fiber is operably connected to a housing, such as a light collection tube, comprising the optical adjustment component, and such housing includes a guide or other connection that causes a bend in the first optical fiber. Including a bend in the optical fiber simplifies the design of embodiments of light detection systems and can improve sensitivity of the system by reducing light-loss or noise of the system. For example, the inclusion of a fiber bend removes the need for a separate light modulation component, such as, for example, a mirror or a plurality of mirrors or an aperture-mirror-fiber assembly, to direct light from the optical adjustment component to the first optical fiber or along the optical fiber to the CWD light detection subsystem, as described herein.

In embodiments, the second optical fiber is configured as an aperture for fluorescent light. In some embodiments, the second optical fiber is configured as an aperture dimensioned for fluorescent light. In certain embodiments, the diameter of the second optical fiber is configured as an aperture dimensioned for fluorescent light. In embodiments, the second optical fiber is 800 µm optical fiber. For example, the second optical fiber has a diameter of 800 µm, such as, for example, a core diameter of 800 µm.

Further details regarding aspects of light detection systems, including optical fibers and optical fiber systems of interest, are discussed in U.S. Application No. 17,577,639, the disclosure of which is incorporated herein.

### CWD light detection subsystems:

As described herein, CWD light detection subsystems of interest comprise a first light receiver configured to convey the first beam of light to a first light detection module and a second light receiver configured to convey the second beam of light to a second light detection module. In embodiments, the first light detection module comprises a small particle detector. Aspects of CWD light detection subsystems are described in detail below. In addition, further details regarding aspects of embodiments of the present invention, including CWD light detection subsystems and aspects thereof, are discussed in U.S. Application No.: 17/870,187 as well as U.S. Patent No. 11,821,830, the disclosures of each of which are incorporated by reference herein in their entirety.

### Light Receivers:

As described herein, CWD light detection subsystems according to embodiments are capable of simultaneous analysis of multiple beams of collected light in a single subsystem. CWD light detection subsystems according to embodiments comprise first and second light receivers. The subject first and second light receivers are configured to receive first and second beams of light, respectively. As discussed herein, a "light receiver" refers to a device configured to receive collected light and propagate said light such that it travels in a desired direction and/or possesses certain properties.

In some embodiments where the first and second light receivers include or interface with an optical collection component, such as optical fiber cables, one or both of the light receivers may include a coupler for operably attaching each respective optical collection component. As described herein, a "coupler" refers to an element configured to join the optical collection component, such as an optical fiber cable, to the light receiver such that light traveling through the optical collection component is transferred to the receiver. Couplers of interest are configured to engage with a fiber optic connector, e.g., in a mating relationship. In some cases, the coupler includes a recess for receiving the optical collection component which, in certain versions, includes a ferrule for securing the optical collection component relative to the coupler. In other embodiments, the coupler is configured to join the optical collection component via one or more fasteners, such as magnets, latches, notches, countersinks, counter-bores, grooves, pins, tethers, hinges, or a combination thereof.

The first and second light receivers may either be the same type or different type of light receiver. In some cases, both the first and second light receivers each include a coupler for operably attaching an optical collection component, i.e., an optical fiber. That is, in embodiments, the first light receiver includes a coupler for operably attaching the first optical fiber, and the second light receiver includes a coupler for operably attaching the second optical fiber.

In some embodiments, one or both of the first and second light receivers additionally includes a beam adjuster. As described herein, a "beam adjuster" is an optical element configured to alter one or more properties of the light received by the light receiver. Properties of interest may include, but are not limited to, irradiation direction, wavelength, beam width, beam intensity and focal spot. Suitable beam adjusters include, for example, lenses, mirrors, pinholes, slits, gratings, light refractors, and any combination thereof. In some instances, the received light is passed through one or more focusing lenses, such as to reduce the profile of the light. In other instances, the beam adjuster includes one or more collimating lenses for reducing divergence of the beam conveyed to the light detection system. In some cases, the beam adjuster is an achromatic doublet lens.

The properties of the first and second beams of light received by the first and second light receivers may be the same or different. For example, in some cases, both the first and the second light beams include light exhibiting the same wavelength or range of wavelengths. In other embodiments, the first and second beams include light exhibiting different wavelengths or ranges of wavelengths. In some embodiments, the first beam of light is particle-modulated light that has been produced by irradiating a particle in a flow cell with a first light source, and the second beam of light is particle-modulated light that has been produced by irradiating a particle in a flow cell with the first light source, i.e., the same light source. In other embodiments, the first beam of light is particle-modulated light that has been produced by irradiating a particle in a flow cell with a first light source, and the second beam of light is particle-modulated light that has been produced by irradiating a particle in a flow cell with a second light source. For example, in some embodiments, the first beam includes light having wavelengths greater than 500 nm. In some versions, the first beam includes a concentration of light energy in the blue spectrum (e.g., 400-500 nm). In such versions, light in the ultraviolet (UV), violet, and yellow-green spectra may have been filtered out from the first beam prior to its reception by the first light receiver. In other versions, the first beam includes a concentration of light energy in the yellow-green spectrum (e.g., 500-600 nm). In such versions, light in the ultraviolet (UV), violet, and blue spectra may have been filtered out from the first beam prior to its reception by the first light receiver. In additional embodiments, the second beam includes light having wavelengths in the blue spectrum (e.g., 400-500 nm). In other embodiments, the second beam includes light having wavelengths greater than 600 nm. In some versions, the second beam includes a concentration of light in the red spectrum (e.g., 600-750 nm). In such versions, light in the UV, violet, blue and yellow-green spectra may have been filtered out from the second beam prior to its reception by the second light receiver.

### Wavelength Separators:

In embodiments, light received from a sample can be divided into spectral ranges by passing the light through one or more wavelength separators. Each spectral range of light generated by the wavelength separators can be further divided via optical components into smaller sub-spectral ranges which are detected by the one or more detectors of each light detection module. In some embodiments, light detected from the sample is emitted light such as fluorescent light. In other embodiments, light detected from the sample is scattered light. The term "scattered light" is used herein in its conventional sense to refer to the propagation of light energy from particles in the sample (e.g., flowing in a flow stream) that are deflected from the incident beam path, such as by reflection, refraction or deflection of the beam of light. In some cases, light detected from the sample is small particle scattered light, i.e., light scattered by small particles.

In embodiments, light detection subsystems as described herein are configured to exhibit little to no light loss from the light collected from the sample, e.g., from the light received from the first and second optical fibers. In some embodiments, light loss due to conveyance of light through the subject light detection subsystem is 25% or less, such as 20% or less, such as 15% or less, such as 10% or less, such as 5% or less, such as 1% or less, such as 0.5% or less, such as 0.1% or less, such as 0.01% or less and including 0.001% or less. In certain instances, there is no light loss from propagating light from the sample through the subject light detection subsystems (i.e., shows no measurable light loss). For example, the amount of light from the sample decreases by 1 mW/cm² or less when conveyed through the subject light detection systems, such as 0.5 mW/cm² or less, such as 0.1 mW/cm² or less, such as 0.05 mW/cm² or less, such as 0.01 mW/cm² or less, such as 0.005 mW/cm² or less, such as 0.001 mW/cm² or less, such as 0.0005 mW/cm² or less, such as 0.0001 mW/cm² or less, such as 0.00005 mW/cm² or less and including 0.00001 mW/cm² or less.

In some embodiments, wavelength separators are configured to generate two or more predetermined spectral ranges of light from a light source (e.g., light from a sample irradiated with light, as described in detail herein), such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more predetermined spectral ranges of light. In some instances, CWD light detection subsystems include a wavelength separator configured to generate first and second predetermined spectral ranges of light from a light source. In other instances, CWD light detection subsystems include a wavelength separator configured to generate first, second and third predetermined spectral ranges of light from a light source.

In some embodiments, CWD light detection subsystems include 2 or more wavelength separators, such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more wavelength separators. The term "wavelength separator" is used herein in its conventional sense to refer to an optical component that is configured to separate light collected from the sample into predetermined spectral ranges. In some embodiments, the wavelength separator is configured to separate light collected from the sample into predetermined spectral ranges by passing light having a predetermined spectral range and reflecting one or more remaining spectral ranges of light. In other embodiments, the wavelength separator is configured to separate light collected from the sample into predetermined spectral ranges by passing light having a predetermined spectral range and absorbing one or more remaining spectral ranges of light. In yet other embodiments, the wavelength separator is configured to spatially diffract light collected from the sample into predetermined spectral ranges. Each wavelength separator may be any convenient light separation protocol, such as one or more dichroic mirrors, bandpass filters, diffraction gratings, beam splitters or prisms. In some embodiments, the wavelength separator is a prism. In other embodiments, the wavelength separator is a diffraction grating. In certain embodiments, wavelength separators in the subject light detection systems are dichroic mirrors.

In embodiments, the wavelength separators are configured to pass light having wavelengths that range from a first wavelength, X*ᵢ* (in nanometers, nm) to a second wavelength X*ₙ* (in nanometers, nm). In some embodiments, the wavelength separators are configured to pass light having wavelengths that range from X*ᵢ* to X*ₙ*, such as from 100 nm to 1500 nm, such as from 150 nm to 1450 nm, such as from 200 nm to 1400 nm, such as from 250 nm to 1350 nm, such as from 300 nm to 1300 nm, such as from 350 nm to 1250 nm, such as from 400 nm to 1200 nm, such as from 450 nm to 1150 nm, such as from 500 nm to 1100 nm, such as from 550 nm to 1050 nm and including passing light having wavelengths that range from 600 nm to 1000 nm. In certain embodiments, wavelength separators in light detection systems of interest are configured to pass light having wavelengths that range from 360 nm to 960 nm.

In embodiments, wavelength separators of interest are each configured to generate predetermined spectral ranges of light, X*ₛ* (in nanometers, nm). The predetermined spectral ranges may vary, where in certain embodiments, wavelength separators of interest are configured to generate spectral ranges (X*ₛ*) of light that span from 50 nm to 300 nm, such as from 75 nm to 275 nm, such as from 100 nm to 250 nm, such as from 125 nm to 225 nm and including from 150 nm to 200 nm. In certain embodiments, each wavelength separator is configured to generate a spectral range of light that spans 100 nm (i.e., X*ₛ* = 100 nm).

In one example, light detection systems include a wavelength separator that is configured to generate a first predetermined spectral range of light of from 360 nm to 480 nm; a second predetermined spectral range of light of from 480 nm to 600 nm; a third predetermined spectral range of light of from 600 nm to 720 nm; a fourth predetermined spectral range of light of from 720 nm to 840 nm; and a fifth predetermined spectral range of light of from 840 nm to 960 nm.

In another example, light detection systems include a first wavelength separator configured to pass light having a wavelength that ranges from 360 nm to 480 nm (i.e., X*ₛ* = 120 nm); a second wavelength separator configured to pass light having a wavelength that ranges from 480 nm to 600 nm; a third wavelength separator configured to pass light having a wavelength that ranges from 600 nm to 720 nm; a fourth wavelength separator configured to pass light having a wavelength that ranges from 720 nm to 840 nm; and a fifth wavelength separator configured to pass light having a wavelength that ranges from 840 nm to 960 nm.

In some embodiments, CWD light detection subsystems of interest include two or more wavelength separators that are in optical communication with each other, such as being positioned to convey light between each other. In other embodiments, CWD light detection subsystems of interest include three or more wavelength separators that are in optical communication with each other, such as being positioned to convey light among each other. The wavelength separators may be oriented with respect to each other in the CWD light detection subsystem (as referenced in an X-Z plane) at an angle ranging from 10° to 180°, such as from 15° to 170°, such as from 20° to 160°, such as from 25° to 150°, such as from 30° to 120° and including from 45° to 90°. In some instances, the wavelength separators are positioned along a single plane. In other instances, the wavelength separators are positioned along more than one plane. For example, the wavelength separators may be positioned along two or more parallel planes, such as three or more, such as four or more and including five or more parallel planes. In certain instances, the wavelength separators are arranged into a geometric configuration, where arrangements of interest include, but are not limited to a square configuration, rectangular configuration, trapezoidal configuration, triangular configuration, hexagonal configuration, heptagonal configuration, octagonal configuration, nonagonal configuration, decagonal configuration, dodecagonal configuration, circular configuration, oval configuration as well as irregular shaped configurations. In certain embodiments, the wavelength separators are arranged in a pentagonal configuration. In other embodiments, the wavelength separators are arranged in a heptagonal configuration. Wavelength separators may be separated from each other by any convenient distance. In some instances, adjacent wavelength separators are separated by 0.001 mm or more, such as by 0.005 mm or more, such as by 0.01 mm or more, such as by 0.05 mm or more, such as by 0.1 mm or more, such as by 0.5 mm or more, such as by 1 mm or more, such as by 2 mm or more, such as by 3 mm or more, such as by 4 mm or more, such as by 5 mm or more, such as by 10 mm or more, such as by 15 mm or more, such as by 25 mm or more and including by 50 mm or more. In certain cases, the distance separating adjacent wavelength separators is constant. In other words, the separation distance is the same for any neighboring pair of wavelength separators. In some instances where the distance separating adjacent wavelength separators in the plurality of wavelength separators is constant, such consistency provides analytical results that are more easily compared after signals received from light sensors, such as photodetectors, are digitized.

In some embodiments, the wavelength separators are configured to convey light between each other. In some instances, each wavelength separator is configured to pass a spectral range of light and to convey (e.g., by reflection) one or more remaining spectral ranges of light to another wavelength separator. In one example, the light detection system includes two wavelength separators. In another example, the light detection system includes 3 wavelength separators. The first wavelength separator is configured to receive light from the sample and to pass a first spectral range of light and convey a second spectral range of light to the second wavelength separator. The second wavelength separator is configured to pass a third spectral range of light and to convey a fourth spectral range of light to the third wavelength separator. In some instances, the third spectral range of light is a portion of the second spectral range of light, such as a spectral range that spans 90% or less of the second spectral range of light, such 85% or less, such as 80% or less, such as 75% or less, such as 70% or less, such as 65% or less, such as 60% or less, such as 55% or less, such as 50%. The third wavelength separator is configured to pass a fifth spectral range of light. In some instances, the fifth spectral range of light is a portion of the fourth spectral range of light, such as a spectral range that spans 90% or less of the fourth spectral range of light, such 85% or less, such as 80% or less, such as 75% or less, such as 70% or less, such as 65% or less, such as 60% or less, such as 55% or less, such as 50%.

In another example, the light detection system includes 5 wavelength separators. The first wavelength separator is configured to receive light from the sample and to pass a first spectral range of light and convey a second spectral range of light to the second wavelength separator. The second wavelength separator is configured to pass a third spectral range of light and to convey a fourth spectral range of light to the third wavelength separator. In some instances, the third spectral range of light is a portion of the second spectral range of light, such as a spectral range that spans 90% or less of the second spectral range of light, such 85% or less, such as 80% or less, such as 75% or less, such as 70% or less, such as 65% or less, such as 60% or less, such as 55% or less, such as 50%. The third wavelength separator is configured to pass a fifth spectral range of light and to convey a sixth spectral range of light to the fourth wavelength separator. In some instances, the fifth spectral range of light is a portion of the fourth spectral range of light, such as a spectral range that spans 90% or less of the fourth spectral range of light, such 85% or less, such as 80% or less, such as 75% or less, such as 70% or less, such as 65% or less, such as 60% or less, such as 55% or less, such as 50%. The fourth wavelength separator is configured to pass a seventh spectral range of light and to convey an eighth spectral range of light to the fifth wavelength separator. In some instances, the seventh spectral range of light is a portion of the sixth spectral range of light, such as a spectral range that spans 90% or less of the sixth spectral range of light, such 85% or less, such as 80% or less, such as 75% or less, such as 70% or less, such as 65% or less, such as 60% or less, such as 55% or less, such as 50%. The fifth wavelength separator is configured to pass a ninth spectral range of light. In some instances, the ninth spectral range of light is a portion of the eighth spectral range of light, such as a spectral range that spans 90% or less of the eighth spectral range of light, such 85% or less, such as 80% or less, such as 75% or less, such as 70% or less, such as 65% or less, such as 60% or less, such as 55% or less, such as 50%.

In certain embodiments, the light detection system includes 5 wavelength separators configured to separate light having wavelengths ranging from 360 nm to 960 nm, where the first wavelength separator is configured to pass light having a wavelength ranging from 360 nm to 480 nm and to convey light having a wavelength that ranges from 480 nm to 960 nm to the second wavelength separator; the second wavelength separator is configured to pass light having a wavelength ranging from 480 nm to 600 nm and to convey light having a wavelength that ranges from 600 nm to 960 nm to the third wavelength separator; the third wavelength separator is configured to pass light having a wavelength ranging from 600 nm to 720 nm and to convey light having a wavelength that ranges from 720 nm to 960 nm to the fourth wavelength separator; and the fourth wavelength separator is configured to pass light having a wavelength ranging from 720 nm to 840 nm and to convey light having a wavelength ranging from 840 nm to 960 nm to the fifth wavelength separator. In this embodiment, the fifth wavelength separator is configured to pass light having a wavelength ranging from 840 nm to 960 nm.

As discussed herein, the subject first and second light receivers are configured to receive first and second beams of light. In some embodiments, the first beam of light is conveyed by a first subset of wavelength separators and the second beam of light is conveyed by a second subset of wavelength separators. For example, in embodiments, the first subset of wavelength separators includes only one wavelength separator configured to pass light having a wavelength that ranges from 450-500 nm (i.e., blue). In another example, in some cases, the first subset of wavelength separators includes a first wavelength separator configured to pass light having a wavelength that ranges from 450-500 nm (i.e., blue), a second wavelength separator configured to pass light having a wavelength that ranges from 600-675 nm (i.e., red), and a third wavelength separator configured to pass light having a wavelength that ranges from 675-750 nm (i.e., red). In other embodiments, the first subset of wavelength separators includes a first wavelength separator configured to pass light having a wavelength that ranges from 450-500 nm (i.e., blue), a second wavelength separator configured to pass light having a wavelength that ranges from 500-600 nm (i.e., yellow-green), a third wavelength separator configured to pass light having a wavelength that ranges from 600-675 nm (i.e., red), and a fourth wavelength separator configured to pass light having a wavelength that ranges from 675-750nm (i.e., red). In certain instances, the second subset of wavelength separators includes a first wavelength separator configured to pass light having a wavelength that ranges from 600-675 nm (i.e., red), and a second wavelength separator configured to pass light having a wavelength that ranges from 675-750 nm (i.e., red). In still other instances, embodiments of CWD light collection subsystems include one subset of wavelength separators, where a wavelength separator is not applied with respect to either or both of the first light detection module and the second light detection module.

Certain embodiments of CWD light detection subsystems additionally include a third light receiver configured to receive a third beam of light. In such embodiments, the same CWD light detection subsystem is configured to analyze three beams of collected light and may further include a third subset of wavelength separators configured to convey the third beam of light.

### Light Detection Modules:

As discussed above, CWD light detection subsystems include a light detection module in optical communication with a light receiver. For example, the first and second light receivers are in optical communication with each of the first and second light detection modules, respectively. In some embodiments, each light detection module is also in optical communication with a wavelength separator. For example, each wavelength separator in the first and second subsets of wavelength separators is in optical communication with a light detection module such that each wavelength separator is associated with a dedicated light detection module. In some embodiments, the light detection modules are positioned in physical contact with the wavelength separator, such as where an opening to the light detection module is physically coupled to the wavelength separator. In other embodiments, each light detection module is positioned from the wavelength separator by 0.001 mm or more, such as by 0.005 mm or more, such as by 0.01 mm or more, such as by 0.05 mm or more, such as by 0.1 mm or more, such as by 0.5 mm or more, such as by 1 mm or more, such as by 2 mm or more, such as by 3 mm or more, such as by 4 mm or more, such as by 5 mm or more, such as by 10 mm or more, such as by 15 mm or more, such as by 25 mm or more and including by 50 mm or more. For instance, each light detection module may be positioned from the wavelength separator by a distance of from 0.0001 mm to 100 mm, such as from 0.0005 mm to 95 mm, such as from 0.001 mm to 90 mm, such as from 0.005 mm to 85 mm, such as from 0.01 mm to 80 mm, such as from 0.05 mm to 75 mm, such as from 0.1 mm to 70 mm, such as from 0.5 mm to 65 mm, such as from 1 mm to 60 mm, such as from 1.5 mm to 55 mm and including from 2 mm to 50 mm. In certain embodiments a wavelength separator is integrated into a light detection module, e.g., present within a single unit.

Light detection modules may be releasably connected to the wavelength separator. The term "releasably" is used herein in its conventional sense such that each light detection module or wavelength separator may be freely detached and re-attached. Light detection modules or wavelength separators may be connected by any convenient protocol. In certain embodiments, the light detection modules and wavelength separators are connected together with a fastener, such as magnets, latches, notches, countersinks, counter-bores, grooves, pins, tethers, hinges, non-permanent adhesives or a combination thereof. In certain instances, a light detection module is connected to a wavelength separator by slot-fitting the wavelength separator into a groove of the light detection module. In yet other instances, a wavelength separator is connected to a light detection module by one or more screws.

In some embodiments, light from each wavelength separator is conveyed to each light detection module by an optical collection system. Each optical collection system may be any suitable light collection protocol that collects the spectral range of light passed by the wavelength separator and directs the light to the light detection module. In some embodiments, the optical collection system includes fiber optics, such as a fiber optics light relay bundle. In other embodiments, the optical collection system is a free-space light relay system.

In embodiments, each optical collection system may be physically coupled to the light detection module, such as with an adhesive, co-molded together or integrated into each light detection module. In certain embodiments, each light detection module and optical collection system are integrated into a single unit. In some instances, each light detection module is coupled to an optical collection system with a connector that fastens the optical collection system to each light detection module, such as with a hook and loop fasteners, magnets, latches, notches, countersinks, counter-bores, grooves, pins, tethers, hinges, non-permanent adhesives or a combination thereof.

In other embodiments, each light detection module and optical collection system are in optical communication, but are not physically in contact. In embodiments, the optical collection system may be positioned 0.001 mm or more from the light detection module, such as 0.005 mm or more, such as 0.01 mm or more, such as 0.05 mm or more, such as 0.1 mm or more, such as 0.5 mm or more, such as 1 mm or more, such as 10 mm or more, such as 25 mm or more, such as 50 mm or more and including 100 mm or more from the light detection module.

In certain embodiments, the optical collection system includes fiber optics. For example, the optical collection system may be a fiber optics light relay bundle and the spectral range of light passed by the wavelength separator is conveyed through the fiber optics light relay bundle to the light detection module. Any fiber optics light relay system may be employed to convey light, where in certain embodiments, suitable fiber optics light relay systems include, but are not limited to, fiber optics light relay systems such as those described in United States Patent No. 6,809,804, the disclosure of which is herein incorporated by reference.

In other embodiments, each optical collection system is a free-space light relay system. In certain embodiments, the free-space light relay system includes a housing having a proximal end and a distal end, the proximal end being coupled to the light detection module. The free-space relay system may include any combination of different optical components, such as one or more of lenses, mirrors, slits, pinholes, wavelength separators, or a combination thereof. For example, in some embodiments, free-space light relay systems of interest include one or more focusing lens. In other embodiments, the subject free-space light relay systems include one or more mirrors. In yet other embodiments, the free-space light relay system includes a collimating lens. In certain embodiments, suitable free-space light relay systems for propagating the spectral range of light from a wavelength separator include, but are not limited to, light relay systems such as those described in United States Patent Nos. 7,643,142; 7,728,974 and 8,223,445, the disclosure of each of which is herein incorporated by reference.

The light detection modules may be arranged (e.g., co-mounted together) in any geometric configuration in the subject CWD light detection subsystems as desired. The light detection modules may be arranged along one or more plane. In some embodiments, the light detection modules may be oriented with respect to each other (as referenced in an X-Z plane) at an angle ranging from 0° to 180°, such as from 10° to 170°, such as from 20° to 160°, such as from 25° to 150°, such as from 30° to 120° and including from 45° to 90°. In embodiments, the light detection modules may be arranged with respect to each other at an angle that is the same or different depending on the number of light detection modules in the light detection system. For example, in certain instances the angle between a first light detection module and a second light detection module is the same as the angle between the second light detection module and a third light detection module. In some embodiments, the angle between a first light detection module and a second light detection module are different than the angle between the second light detection module and a third light detection module. In some embodiments, the light detection modules are positioned in a geometric arrangement such as a star-shaped configuration, a triangular configuration, a square configuration, rectangular configuration, trapezoidal configuration, triangular configuration, hexagonal configuration, heptagonal configuration, octagonal configuration, nonagonal configuration, decagonal configuration, dodecagonal configuration, circular configuration, oval configuration as well as irregular shaped configurations.

In some embodiments, light detection modules possess complementary shapes such that the modules may be co-located with one another when they are arranged around a central point. In some embodiments, the light detection modules are substantially wedge-shaped. In other words, if the light detection system were conceptualized as a pie, each constituent light detection module may be thought of as a slice of the pie. By "substantially wedge-shaped" it is meant that the light detection modules may or may not be perfect wedges and, in some embodiments, include one or more regions in which the sides of the modules deviate from a straight line. Light detection modules may be located in close proximity to one another, such as where adjacent light detection modules are separated by 5 mm or less, such as 4 mm or less, 3 mm or less, 2 mm or less, 1 mm or less, 0.5 mm or less and including where the light detection modules are in physical contact with one another.

Embodiments of CWD light detection subsystems comprise a first light detection module configured for small particle detection, comprising a small particle detector and in some cases a side scatter detector. Embodiments of CWD light detection subsystems further comprise a second light detection module for detecting fluorescent light. Embodiments of CWD light detection subsystems still further comprise more than two light detection modules for detecting aspects of light received from the sample, such as, for example, spectral ranges of fluorescent light.

### Side-scattered light detector.

In embodiments, the first light detection module of the CWD light detection subsystem includes a side-scattered light detector (also referred to as a side-scatter detector). As discussed herein, side-scattered light is the light that is scattered by a particle in an orthogonal direction, or substantially orthogonal direction, to the excitation laser. In some cases, the CWD light detection subsystem may additionally include a side-scattered light separator configured to separate side scattered wavelength light from light received by the first light receiver. The side-scattered light separator may, in certain instances, be positioned between the first light receiver and the first light detection module. In some cases, the side scattered-light separator may be configured to redirect (e.g., back-scatter) side scattered light at an angle ranging from 1° to 90° with respect to the optical axis of light received by the light receiver, such as 30° to 60° and including 40° to 50°. The redirected light is subsequently detected by the side-scattered light detector. Any convenient detector may be employed as the side-scattered light detector described herein. In some embodiments, the side-scattered light detector is a photomultiplier tube (PMT). In other embodiments, the side-scattered light detector is a photodiode (e.g., an avalanche photodiode). In some embodiments, the side-scattered light detector is equipped with a focusing aspheric lens that concentrates light on the photosensitive area of the detector. In other embodiments, one or more optical filters may be employed instead of, or in addition to, the focusing aspheric lens.

### Small particle detector.

In embodiments, the first light detection system includes a small particle detector (also referred to as a small particle side-scattered light detector or as a small particle side-scatter detector). As discussed herein, side-scattered light is the light that is scattered by a particle in an orthogonal, or substantially orthogonal, direction to the excitation laser, and small particle side-scattered light is light that is scattered as such by a small particle, as described herein. In embodiments, the CWD light detection subsystem may additionally include a small particle side-scattered light separator configured to separate small particle side scattered wavelength light from light received by the first light receiver. The small particle side-scattered light separator may, in certain instances, be positioned between the first light receiver and the first light detection module. In some cases, the small particle side scattered-light separator may be configured to redirect (e.g., back-scatter) small particle side scattered light at an angle ranging from 1° to 90° with respect to the optical axis of light received by the light receiver, such as 30° to 60° and including 40° to 50°. The redirected light is subsequently detected by the small particle side-scattered light detector. In embodiments, the small particle detector is a photodiode (e.g., an avalanche photodiode). In some embodiments, the side-scattered light detector is equipped with a focusing aspheric lens that concentrates light on the photosensitive area of the detector. In other embodiments, one or more optical filters may be employed instead of, or in addition to, the focusing aspheric lens.

In embodiments, the first light detection module includes a second beam splitter configured to split the first beam of light into third and fourth beams of light. That is, the second beam splitter splits the first beam of light, received from the first light receiver and the first optical fiber, into third and fourth beams of light. In embodiments, the first light detection module is configured to convey the third beam of light to the small particle detector and to convey the fourth beam of light to the side scatter detector. In embodiments, the first light detection module further comprises one or more mirrors, which, in conjunction with the beamsplitter, convey the third beam of light to the small particle detector. Further, in embodiments, the second light detection module is configured to detect fluorescent light. In such embodiments, one or more of the second light receiver, a wavelength separator and the second light detection module are configured to convey fluorescent light to a fluorescent light detector of the second light detection module.

### Additional CWD light detection subsystems:

As described, embodiments of the present invention comprise a CWD light detection subsystem. Such CWD light detection subsystems comprise a first light detection module comprising a small particle detector. Such CWD light detection subsystems further comprise a second light detection module comprising a light detector, configured to detect fluorescent light. Such CWD light detection subsystems may still further comprise additional light detection modules configured to detect additional aspects of light from the sample. In embodiments, such CWD light detection subsystem is configured to detect blue light. That is, the first light detection module may be configured to detect blue light scattered by small particles in the flow stream, and the second light detection module may be configured to detect blue fluorescent light from the particles in the flow stream. Embodiments of the present invention may further comprise a second CWD light detection subsystem comprising a third light receiver configured to convey a third beam of light to a third light detection module and a third optical fiber configured to convey the third beam of light to the third light receiver of the second CWD light detection subsystem. In embodiments, a diameter of the third optical fiber is configured as an aperture dimensioned for fluorescent light. In some cases, the third optical fiber has a diameter of 800 µm. In certain cases, the second CWD light detection module is configured to detect violet fluorescent light.

### Optical components of light detection modules:

In some embodiments, each light detection module includes an optical adjustment component (in some cases referred to as "optical component") configured to convey light having a predetermined sub-spectral range to one or more light detectors, e.g., photodetectors. By "optical adjustment," it is meant that light is changed or adjusted when conveyed to each photodetector in the light detection module. In some embodiments, optical adjustment includes propagating light having a predetermined sub-spectral range to a photodetector. In some embodiments, each light detection module includes one or more optical adjustment components that are configured to separate light conveyed from the wavelength separator into predetermined sub-spectral ranges by passing light having a predetermined sub-spectral range and reflecting one or more remaining spectral ranges of light. In other embodiments, the optical adjustment component is configured to separate light conveyed from the wavelength separator into predetermined sub-spectral ranges by passing light having a predetermined sub-spectral range and absorbing one or more remaining spectral ranges of light. In yet other embodiments, the optical adjustment component is configured to spatially diffract light conveyed from the wavelength separator into the predetermined sub-spectral ranges. Optical adjustment components may be any convenient light separation protocol, such as one or more dichroic mirrors, bandpass filters, diffraction gratings, beam splitters or prisms. In certain embodiments, optical adjustment components in the light detection modules that are configured to separate light conveyed from the wavelength separator into predetermined sub-spectral ranges are dichroic mirrors.

Depending on the wavelengths of light passed from the wavelength separator to the light detection module (as described herein), the one or more optical components in the light detection module may be configured to convey light having wavelengths that range from a first wavelength, Y*ᵢ* (in nanometers, nm) to a second wavelength Y*ₙ* (in nanometers, nm) to the photodetectors. In some embodiments, the one or more optical components are configured to convey light having wavelengths that range from 100 nm to 1500 nm to the photodetectors, such as from 150 nm to 1450 nm, such as from 200 nm to 1400 nm, such as from 250 nm to 1350 nm, such as from 300 nm to 1300 nm, such as from 350 nm to 1250 nm, such as from 400 nm to 1200 nm, such as from 450 nm to 1150 nm, such as from 500 nm to 1100 nm, such as from 550 nm to 1050 nm and including propagating light having wavelengths that range from 600 nm to 1000 nm to the photodetectors.

In embodiments, the optical components in each light detection module are configured to convey a predetermined sub-spectral range of light, Y*ₛ* (in nanometers, nm) to each photodetector. The predetermined sub-spectral ranges conveyed by each optical component may vary, where certain optical components of interest are configured to convey sub-spectral ranges of light that span from 5 nm to 50 nm, such as from 6 nm to 49 nm, such as from 7 nm to 48 nm, such as from 8 nm to 47 nm, such as from 9 nm to 46 nm and including from 10 nm to 45 nm. In certain embodiments, the optical component is configured to pass a spectral range of light that spans 20 nm.

For instance, in one example the one or more optical components are configured to pass light having wavelengths that range from 360 nm (i.e., Y*ᵢ* = 360 nm) to a 480 nm (i.e., Y*ₙ* = 480 nm) in sub-spectral ranges that span 20 nm (i.e., Y*ₛ* = 20 nm). In this embodiment, the light detection module includes a first optical component that is configured to convey light having wavelengths that range from 360 nm to 380 nm to a photodetector; a second optical component that is configured to convey light having wavelengths that range from 380 nm to 400 nm to a photodetector; a third optical component that is configured to convey light having wavelengths that range from 400 nm to 420 nm to a photodetector; a fourth optical component that is configured to convey light having wavelengths that range from 420 nm to 440 nm to a photodetector; a fifth optical component that is configured to convey light having wavelengths that range from 440 nm to 460 nm to a photodetector; and a sixth optical component that is configured to convey light having wavelengths that range from 460 nm to 480 nm to a photodetector.

In some embodiments, the optical components in each light detection module are in optical communication with each other, such as being positioned to convey light between each other. The optical components may be oriented with respect to each other in the light detection module (as referenced in an X-Z plane) at an angle ranging from 10° to 180°, such as from 15° to 170°, such as from 20° to 160°, such as from 25° to 150°, such as from 30° to 120° and including from 45° to 90°. In some instances, the optical components are positioned along a single plane. In other instances, the optical components are positioned along more than one plane. For example, the optical components may be positioned along two or more parallel planes, such as three or more, such as four or more and including five or more parallel planes. In certain instances, the optical components are arranged into a geometric configuration, where arrangements of interest include, but are not limited to a square configuration, rectangular configuration, trapezoidal configuration, triangular configuration, hexagonal configuration, heptagonal configuration, octagonal configuration, nonagonal configuration, decagonal configuration, dodecagonal configuration, circular configuration, oval configuration as well as irregular shaped configurations. In certain embodiments, the optical components are arranged in a hexagonal configuration. In other embodiments, the optical components are arranged in a heptagonal configuration.

In some embodiments, the optical components are configured to convey light between each other. In some instances, each optical component is configured to pass a spectral range of light and to convey (e.g., by reflection) one or more remaining spectral ranges of light to another optical component. In one example, the light detection module includes 3 optical components. The first optical component is configured to receive light from a wavelength separator and to pass a first sub-spectral range of light and convey a second sub-spectral range of light to the second optical component. The second optical component is configured to pass a third sub-spectral range of light and to convey a fourth sub-spectral range of light to the third optical component. In some instances, the third sub-spectral range of light is a portion of the second sub-spectral range of light, such as a sub-spectral range that spans 90% or less of the second sub-spectral range of light, such 85% or less, such as 80% or less, such as 75% or less, such as 70% or less, such as 65% or less, such as 60% or less, such as 55% or less, such as 50%. The third optical component is configured to pass a fifth sub-spectral range of light. In some instances, the fifth sub-spectral range of light is a portion of the fourth sub-spectral range of light, such as a sub-spectral range that spans 90% or less of the fourth sub-spectral range of light, such 85% or less, such as 80% or less, such as 75% or less, such as 70% or less, such as 65% or less, such as 60% or less, such as 55% or less, such as 50%.

In another example, the light detection module includes 5 optical components. The first optical component is configured to receive light from a wavelength separator and to pass a first sub-spectral range of light and convey a second sub-spectral range of light to the second optical component. The second optical component is configured to pass a third sub-spectral range of light and to convey a fourth sub-spectral range of light to the third optical component. In some instances, the third sub-spectral range of light is a portion of the second sub-spectral range of light, such as a sub-spectral range that spans 90% or less of the second sub-spectral range of light, such 85% or less, such as 80% or less, such as 75% or less, such as 70% or less, such as 65% or less, such as 60% or less, such as 55% or less, such as 50%. The third optical component is configured to pass a fifth sub-spectral range of light and to convey a sixth sub-spectral range of light to the fourth optical component. In some instances, the fifth sub-spectral range of light is a portion of the fourth sub-spectral range of light, such as a sub-spectral range that spans 90% or less of the fourth sub-spectral range of light, such 85% or less, such as 80% or less, such as 75% or less, such as 70% or less, such as 65% or less, such as 60% or less, such as 55% or less, such as 50%. The fourth optical component is configured to pass a seventh sub-spectral range of light and to convey an eighth sub-spectral range of light to the fifth optical component. In some instances, the seventh spectral range of light is a portion of the sixth spectral range of light, such as a spectral range that spans 90% or less of the sixth spectral range of light, such 85% or less, such as 80% or less, such as 75% or less, such as 70% or less, such as 65% or less, such as 60% or less, such as 55% or less, such as 50%. The fifth optical component is configured to pass a ninth sub-spectral range of light. In some instances, the ninth sub-spectral range of light is a portion of the eighth sub-spectral range of light, such as a sub-spectral range that spans 90% or less of the eighth sub-spectral range of light, such 85% or less, such as 80% or less, such as 75% or less, such as 70% or less, such as 65% or less, such as 60% or less, such as 55% or less, such as 50%.

As described herein, CWD light detection subsystems are configured to generate a plurality of sub-spectral ranges of light from the light collected from the sample. In some embodiments, CWD light detection subsystems are configured to generate 2 or more distinct spectral ranges of light for every reflection by an optical component (e.g., dichroic mirror) in the CWD light detection subsystem, such as 3 or more, such as 4 or more and including being configured to generate 5 or more distinct spectral ranges of light for every reflection by an optical component in the subject light detection systems. In certain embodiments, CWD light detection subsystems are configured to generate 30 distinct spectral ranges using 10 reflections by optical components or less, such as generating 30 distinct spectral ranges of light from 9 reflections by optical components or less. In certain instances, the ratio of generated distinct spectral ranges to number of reflections by optical components in the subject light detection systems may range from 2:1 to 10:1, such as from 3:1 to 7:1 and including from 3:1 to 5:1.

In some instances, the optical component is configured to collimate the light. The term "collimate" is used in its conventional sense to refer to the optically adjusting the collinearity of light propagation or reducing divergence by the light from a common axis of propagation. In some instances, collimating includes narrowing the spatial cross section of a light beam. In other instances, the optical component includes a protocol for changing the direction of the light beam, such as changing the propagation of the light beam by 1° or more, such as by 5° or more, such as by 10° or more, such as by 15° or more, such as by 20° or more, such as by 25° or more, such as by 30° or more, such as by 45° or more, such as by 60° or more, such as by 75° or more and including changing the direction of light propagation by 90° or more. In yet other instances, the optical component includes a de-magnification protocol so as to decrease the dimensions of the light (e.g., beam spot), such as decreasing the dimensions by 5% or more, such as by 10% or more, such as by 25% or more, such as by 50% or more and including decreasing the dimensions by 75% or more.

Each sub-spectral range of light is conveyed by the optical component to a photodetector. In some embodiments, the optical component is in physical contact with the photodetector. In other embodiments, the optical component is in optical communication with the active surface of the photodetector and may be positioned 0.001 mm or more from the photodetector, such as 0.005 mm or more, such as 0.01 mm or more, such as 0.05 mm or more, such as 0.1 mm or more, such as 0.5 mm or more, such as 1 mm or more, such as 10 mm or more, such as 25 mm or more, such as 50 mm or more and including 100 mm or more from the photodetector.

In embodiments, each light detection module includes one or more photodetectors, such as 2 or more, such as 3 or more, such as 4 or more, such as 5 or more, such as 6 or more, such as 7 or more, such as 8 or more, such as 9 or more, such as 10 or more, such as 15 or more, such as 25 or more, such as 50 or more and including 100 or more photodetectors. In some embodiments, light detection modules include one or more photodetector arrays. The term "photodetector array" is used in its conventional sense to refer to an arrangement or series of two or more photodetectors. In embodiments, photodetector arrays may include 2 or more photodetectors, such as 3 or more photodetectors, such as 4 or more photodetectors, such as 5 or more photodetectors, such as 6 or more photodetectors, such as 7 or more photodetectors, such as 8 or more photodetectors, such as 9 or more photodetectors, such as 10 or more photodetectors, such as 12 or more photodetectors and including 15 or more photodetectors. The photodetectors in each array may be arranged in any geometric configuration as desired, where arrangements of interest include, but are not limited to a square configuration, rectangular configuration, trapezoidal configuration, triangular configuration, hexagonal configuration, heptagonal configuration, octagonal configuration, nonagonal configuration, decagonal configuration, dodecagonal configuration, circular configuration, oval configuration as well as irregular shaped configurations. The photodetectors in each photodetector array may be oriented with respect to the other (as referenced in an X-Z plane) at an angle ranging from 10° to 180°, such as from 15° to 170°, such as from 20° to 160°, such as from 25° to 150°, such as from 30° to 120° and including from 45° to 90°.

### Photodetectors:

As described herein, the photodetectors may be any convenient optical sensor, such as active-pixel sensors (APSs), avalanche photodiodes, image sensors, charge-coupled devices (CCDs), intensified charge-coupled devices (ICCDs), complementary metal-oxide semiconductor (CMOS) image sensors or N-type metal-oxide semiconductor (NMOS) image sensors, light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other types of photodetectors. In certain embodiments, photodetectors include photomultiplier tubes, such as metal package photomultiplier tubes. As described herein, in embodiments, the small particle detector of the first light detection module is an avalanche photodiode.

Photodetectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths.

In embodiments, the photodetectors are configured to measure light continuously or in discrete intervals. In some instances, photodetectors of interest are configured to take measurements of the collected light continuously. In other instances, the photodetectors are configured to take measurements in discrete intervals, such as measuring light every 0.001 millisecond, every 0.01 millisecond, every 0.1 millisecond, every 1 millisecond, every 10 milliseconds, every 100 milliseconds and including every 1,000 milliseconds, or some other interval.

In certain embodiments, one or more of the photodetectors described herein are positioned in a detection block. Detection blocks of interest are configured to receive one or more photodetectors therein. The detection blocks described herein may be constructed from any convenient material. In some embodiments, detection blocks include a thermally conductive material. In certain embodiments, the thermally conductive material includes a metal, such as copper or aluminum. In certain cases, the detection block is manufactured from copper. In some instances, detection blocks are coated with a thermal compound (e.g., thermal paste). Thermal compounds of interest include, but are not limited to epoxies, silicones, urethanes and acrylates. One or more photodetectors may be secured to the detector block within a light detection module, for example, by a clamp described in U.S. Provisional Patent Application No.: 63/210,390, the disclosure of which is incorporated by reference in its entirety.

### Temperature regulation system:

In some instances, CWD light detection subsystems additionally include a temperature regulation system configured to dissipate heat produced by the photodetectors. For example, in embodiments, light detection modules include a thermoelectric cooler in contact with a bottom surface of one or more detection blocks. The term "thermoelectric cooler" is used herein in its conventional sense to refer to a heat pump which transfers heat between the junction of two different surfaces (e.g., a "cool" surface and a "hot" surface) in response to the application of an electrical current. In certain embodiments, heat flux between the two different surfaces is generated by the Peltier effect and thermoelectric coolers of interest are Peltier heat pumps. In some embodiments, the two different surfaces (e.g. plates) of the thermoelectric cooler are formed from different materials (n-type semiconductors, p-type semiconductors), such as narrow band-gap semiconductors and heavy element materials having low thermal conductivity. For example, the surfaces of thermoelectric coolers of interest may be formed from semiconductors such as bismuth telluride, lead telluride, silicon germanium, bismuth-antimony alloys, and combinations thereof. In some instances, thermoelectric coolers are coated with a thermal compound (e.g., thermal paste). Thermal compounds of interest include, but are not limited to epoxies, silicones, urethanes and acrylates. In certain embodiments, thermoelectric coolers of interest include those described in U.S. Patent Publication No. 2004/0155251, U.S. Patent No. 6,499,306; 4,581,898; 4,922,822; 5,409,547 and 2,984,077, the disclosures of which are incorporated herein by reference.

In additional embodiments, light detection modules include a heat sink in thermal contact with the thermoelectric cooler. The heat sink may include, for example, heat dissipation fins. Heat dissipation fins according to embodiments may be any convenient shape configured to dissipate heat from the heat transfer block and may be a cylinder, cube, cone, cylinder, half sphere, star, triangular prism, rectangular prism (cuboid), hexagonal prism or other suitable polyhedron. For example, the heat dissipation fin may have a cross-section in the shape of a circle, oval, half-circle, crescent-shaped, star-shaped, square, triangle, rhomboid, pentagon, hexagon, heptagon, octagon, rectangle or other polygon. The heat sink may, in certain embodiments, include a plurality of heat dissipation fins, such as 2 or more heat dissipation fins, such as 5 or more, such as 10 or more, such as 15 or more, such as 25 or more, such as 50 or more and including 100 or more heat dissipation fins.

In embodiments, the temperature regulation system additionally includes an air intake at a bottom portion of each light detection module. Cool air received from the intake passes through the heat sink of each light detection module. Heat is transferred from the heat dissipation fins of the heat sink to the air. The resulting heated air is pooled from each light detection module and is expelled.

### Exemplary embodiments:

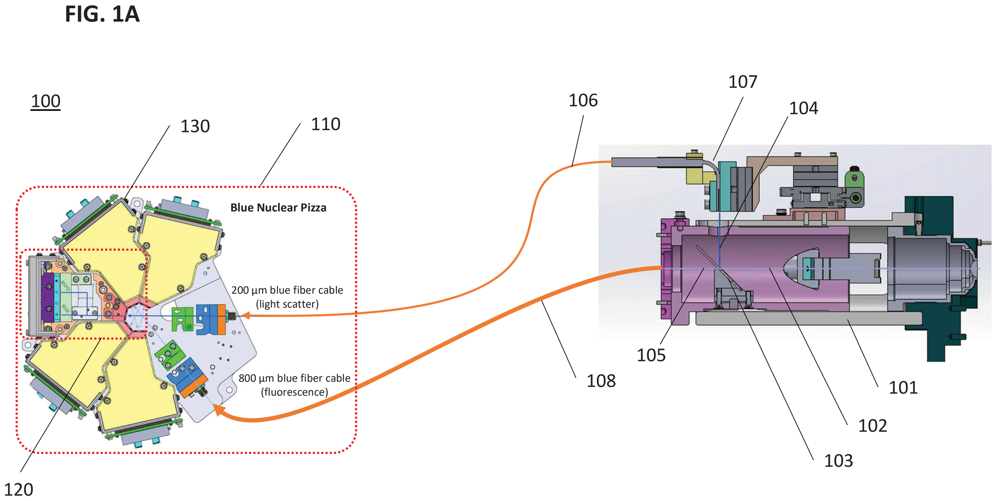

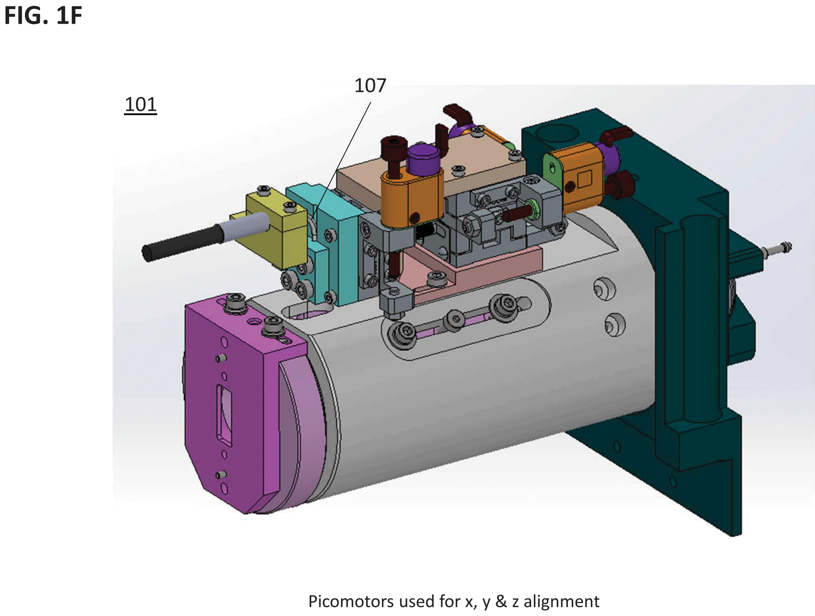

**FIGS. 1A-1C** present different views of a light detection system for small particle detection according to certain embodiments of the disclosure. **FIG. 1A** depicts light detection system 100. In light detection system 100, a light collection tube 101 receives a beam of light 102 from a flow cell (not shown) of, e.g., a flow cytometer (i.e., such that the beam of light 102 is traveling from the right-hand side of the figure towards the lefthand side of the figure). As the beam of light 102 travels from right to left, the beam of light 102 encounters an optical adjustment component that is a beam splitter 103 located in collection tube 101. Beam splitter 103 splits the beam of light 102 received from the flow cell into a first beam of light 104 and a second beam of light 105. The first beam of light 104 comprises a light scattered from a particle excited within the flow cell, and the second beam of light 105 comprises a fluorescence of the particle excited within the flow cell. Beam splitter 103 directs the first beam of light 104 towards a first optical fiber 106, and beam splitter 103 directs the second beam of light 105 towards a second optical fiber 108. That is, the proximal end of the first optical fiber 106 is in optical communication with the beam splitter 103, such that the first beam of light 104 is conveyed from the beam splitter 103 to the first optical fiber 106. Similarly, the proximal end of the second optical fiber 108 is in optical communication with the beam splitter 103, such that the second beam of light 105 is conveyed from the beam splitter 103 to the second optical fiber 108.

In embodiments, the diameter of the first optical fiber 106 is smaller than the diameter of the second optical fiber 108. In light detection system 100, the first optical fiber 106 is an aperture for small particle light, and the second optical fiber 108 is an aperture for fluorescent light. In particular, the first optical fiber 106 is selected to have a diameter such that the first optical fiber 106 is an aperture for small particle light, and the second optical fiber 108 is selected to have a diameter such that the second optical fiber 108 is an aperture for fluorescent light. In embodiments, the first optical fiber 106 is 200 µm fiber, and the second optical fiber 108 is 800 µm fiber. First optical fiber 106 includes a fiber bend 107 in order to redirect the first beam of light 104. In the embodiment shown, fiber bend 107 is approximately a 90-degree fiber bend; however, larger or small fiber bends are also contemplated, and such bend may vary as needed to conveniently route the first optical fiber 106 within the light detection system 100.

First optical fiber 106 is configured to convey the first beam of light 104 from the beam splitter 103 to a first light receiver 111 of a clustered wavelength division (CWD) light detection subsystem 110. That is, as described, the proximal end of the first optical fiber 106 is in optical communication with the beam splitter 103, and the distal end of the first optical fiber 106 is in optical communication with the first light receiver 111, such that the first optical fiber 106 conveys light from the beam splitter 103 to the first light receiver 111 of the CWD light detection subsystem 110. First light receiver 111 is positioned to convey light to a first light detection module 120 of the CWD light detection subsystem 110.

Second optical fiber 108 is configured to convey the second beam of light 105 from the beam splitter 103 to a second light receiver 113 of the CWD light detection subsystem 110. That is, as described, the proximal end of the second optical fiber 108 is in optical communication with the beam splitter 103, and the distal end of the second optical fiber 108 is in optical communication with the second light receiver 113, such that the second optical fiber 108 conveys light from the beam splitter 103 to the second light receiver 113 of the CWD light detection subsystem 110. Second light receiver 113 is positioned to convey light to a second light detection module 130 of the CWD light detection subsystem 110.

In embodiments, the light collection tube 101 and the optical adjustment component that is a beam splitter 103 may be located any convenient distance away from the CWD light detection subsystem 110. In embodiments, optically conveying the first and second beams of light 104, 105 to the CWD light detection subsystem 110 using first and second optical fibers 106, 108, including utilizing fiber bend 107, enables design flexibility around the placement (i.e., separation distance or orientation or relative orientation or the like) of components of the light detection system 100, such as placement of the light collection tube 101 and the CWD light detection subsystem 110 as well as additional CWD light detection subsystems when such are present and also facilitates transmitting light to the CWD light detection subsystem while reducing light-loss or noise.

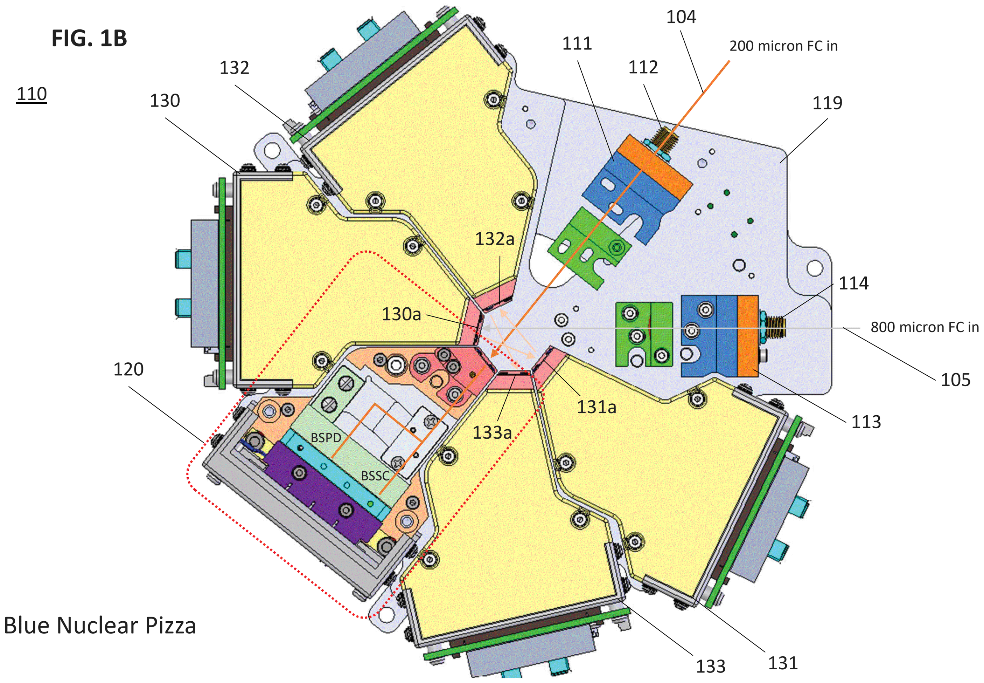

**FIG. 1B** shows a close-up view of the CWD light detection subsystem 110. The CWD light detection subsystem 110 receives the first beam of light 104 conveyed by the first optical fiber 106 at the first light receiver 111 and receives the second beam of light 105 conveyed by the second optical fiber 108 at the second light receiver 113. The first and second light receivers 112, 113 are attached to a baseplate 119 of CWD light detection subsystem 120 such that the first and second light receivers 112, 113 are in fixed positions relative to each other. In embodiments, the first light receiver 111 may comprise a first coupler 112 configured to operably attach an optical fiber, such as the first optical fiber 106, to the first light receiver 111, and the second light receiver 113 may comprise a second coupler 114 configured to operably attach an optical fiber, such as the second optical fiber 108, to the second light receiver 113. The first and second couplers 112, 113 may comprise, for example, threaded connections configured to engage with a housing or connector of the first and second optical fibers 106, 108.

The CWD light detection subsystem 110 further comprises a first light detection module 120 and a second light detection module 130. Upon receiving the first light beam 104 conveyed from the first optical fiber 106, the first light receiver 111 directs the first light beam 104 to the first light detection module 120. First light detection module 120 is shown in a cutaway view. The first light detection module 120 includes a small particle detector 121 (SPD) for detecting light from small particles, such as blue scatter light from small particles. The first light detection module 120 further includes a side-scatter detector (BSSC) for detecting side scatter light not limited to light scattered by small particles.

Similarly, upon receiving the second light beam 105 conveyed from the second optical fiber 108, the second light receiver 113 directs the second light beam 105 to the second light module 130. The second light detection module 130 includes one or more detectors for detecting fluorescent light, such as blue florescent light. Unlike the first light detection module 120, the second light detection module 130 is not shown in a cutaway view.

The CWD light detection subsystem 110 also includes third light detection module 131, fourth light detection module 132 and fifth light detection module 133. Unlike the first light detection module 120, the third, fourth and fifth light detection modules 131, 132, 133 are not shown in a cutaway view. Each of the third, fourth and fifth light detection modules 131, 132, 133 receives light originating from the second beam 105 for detection of certain specified spectral ranges of light. After entering CWD light detection subsystem 100 through second light receiver 113, second light beam 105 encounters wavelength separator 130a associated with second light detection module 130. Wavelength separator 130a passes light having a predetermined spectral range (i.e., passes light into second light detection module 130) and directs the remaining light to wavelength separator 131a associated with third light detection module 131. Wavelength separator 131a passes light having a predetermined spectral range (i.e., passes light into third light detection module 131) and directs remaining light to wavelength separator 132a associated with fourth light detection module 132. Wavelength separator 132a passes light having a predetermined spectral range (i.e., passes light into fourth light detection module 132) and directs the remaining light to wavelength separator 133a associated with fifth light detection module 133.

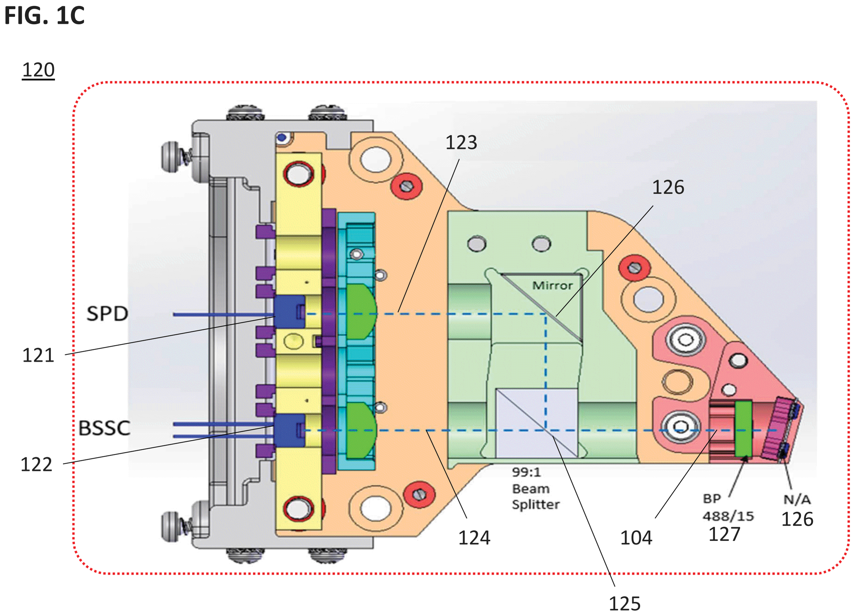

**FIG.** 1C shows a close-up, cutaway view of the first light detection module 120. The first light detection module 120 comprises a small particle detector 121 for detecting light associated with small particles and is a dedicated high-sensitivity detector. In this case, the small particle detector 121 is a dedicated detector for sensing scattered light for analysis of small particles. In the embodiment shown, the small particle detector 121 is an avalanche photo diode. In embodiments, the first light detection module 120 also comprises another detector, such as side scatter detector 122.

The first light detection module 120 further comprise a second beam splitter 125 configured to split the first beam of light 104 into a third beam of light 123 and a fourth beam of light 124. The first light detection module 120 is configured to convey the third beam of light 123 to the small particle detector 121 and to convey the fourth beam of light 124 to the side scatter detector 122, e.g., utilizing mirror 126. The first light detection module 120 also includes a lens 127 and a bandpass filter 128 for adjusting characteristics of the first beam of light 104 before the first beam of light 104 arrives at the small particle detector 121 or the side scatter detector 122.

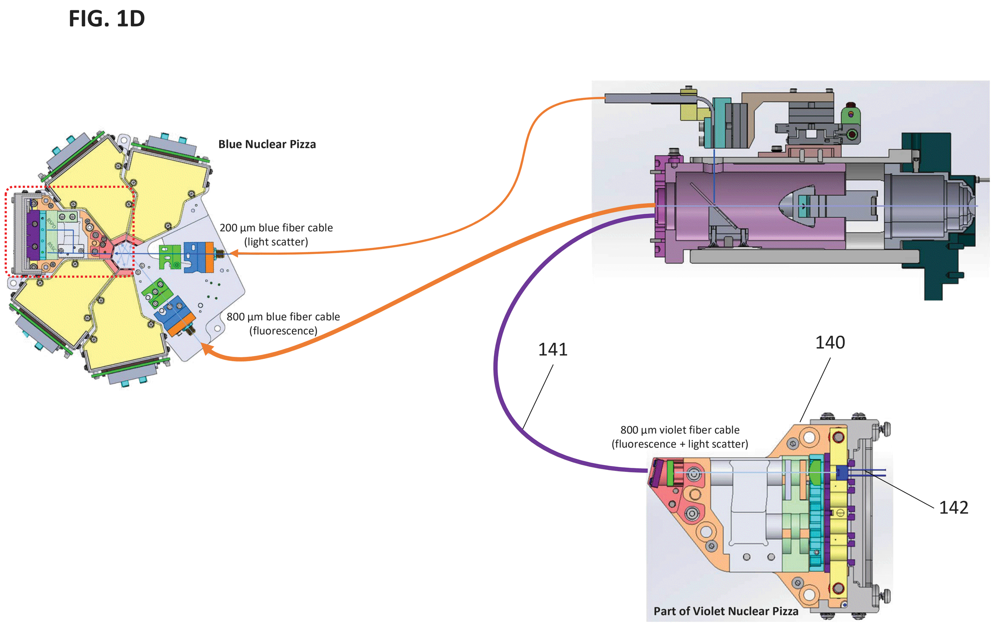

**FIG. 1D** shows the light detection system 100 for small particle detection depicted in **FIGS 1A-1C** further augmented for detecting additional fluorescent light and scatter light, in this case, violet fluorescent light and violet scatter light, in a dedicated light detection module. In this case, light detection system 100 further comprises a second CWD light detection subsystem which includes a third optical fiber 141 and a third light detection module 140. The third optical fiber 141 conveys light from the light collection tube 101 to the third light detection module 140. The third optical fiber 141 is selected such that the third optical fiber 141 is an aperture for the desired light (in this case, violet fluorescent light and scatter light) and in this case the third optical fiber 141 is 800 µm fiber. The third light detection module 140 is shown in cutaway view and includes a detector 142 for sensing and analyzing fluorescent light and/or light scatter. Light conveyed to the third light detection module 140 by the third optical fiber 141 is directed to detector 142. The third optical fiber 141 conveys light to the second CWD light detection subsystem by transmitting light to a third light receiver (not shown), which, in turn, conveys light to the third light detection module 140 and subsequently the detector 142 present therein. The second CWD light detection system may include additional light detection modules for detection of specific spectra of light selected using wavelength separators, as described herein.

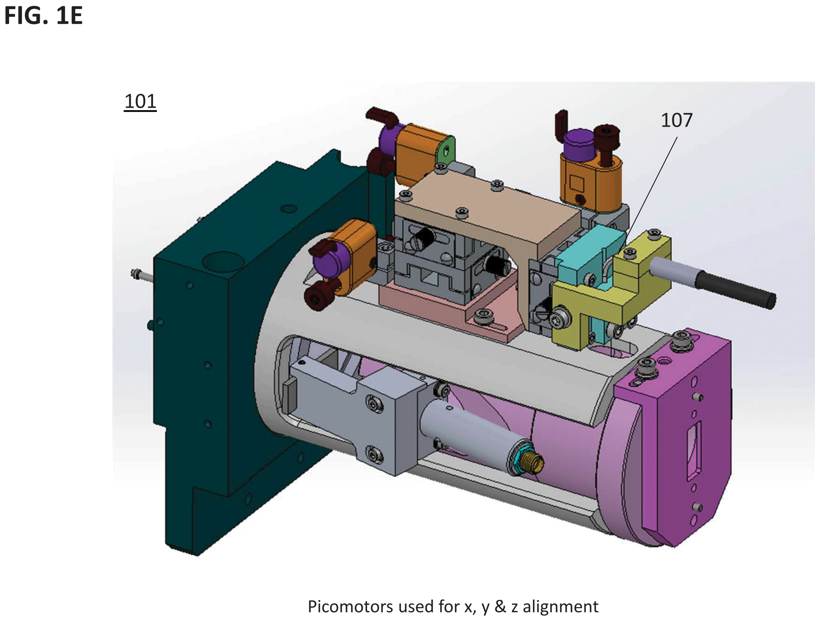

**FIGS. 1E-1F** show close up views of the light collection tube 101. The light collection tube 101 interfaces with a flow cell of, e.g., a flow cytometer, such that the light collection tube 101 receives light from the flow cell, ultimately, for transmission to the small particle detector 121 of the CWD light detection subsystem 110. The light collection tube 101 is mounted using picomotors to allow for fine-tuning the position of the beam of light received from the flow cell entering the light collection tube 101 along three axes, x, y and z. In embodiments, the light collection tube 101 may be attached to or integrated with a flow cytometer such that light from the flow cell of the flow cytometer is received by the light collection tube 101 for small particle detection.

### FLOW CYTOMETERS

Aspects of the disclosure also include flow cytometers. Flow cytometers of interest include, or are operably connected to, a light detection system for small particle detection of the disclosure. As described in detail herein, light detection system for small particle detection of interest include a small particle detector for detecting the presence of, or information regarding, small particles present in a flow stream. In addition, flow cytometers include a light source configured to irradiate the particles in the flow stream at an interrogation point within a flow cell. Light received from the flow stream at the flow cell may be conveyed to an optical adjustment component (such as, for example, a beam splitter or a multi-modal notch filter) of light detection system for small particle detection of the disclosure.

Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Flow cytometers of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example, lasers in light beam generators of interest include those listed above.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1): 17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference. In some embodiments where the flow cytometer is a particle sorter, the particle sorter is an image enabled particle sorter. Image enabled particle sorters are described in U.S. Patent Nos. 10,324,019; 10,620,111; 11,105,728; and 11,774,343; as well as U.S. Patent Application Nos. 18/537,103; 18/657,618; 18,657,623 and 18/657,633; the disclosures of which are herein incorporated by reference in their entirety.

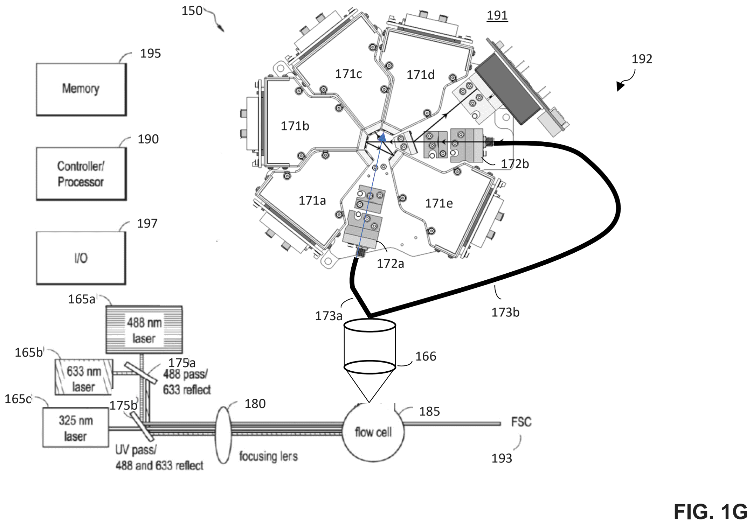

FIG. 1G shows a system 150 for flow cytometry in accordance with an illustrative embodiment of the present invention. The system 150 includes a flow cytometer 192, a controller/processor 190 and a memory 195. The flow cytometer 192 includes one or more excitation lasers 165a-165c, a focusing lens 180, a flow cell 185, a forward-scatter photodetector 193, a light collection tube 166 comprising an optical adjustment component, and light detection system 191.

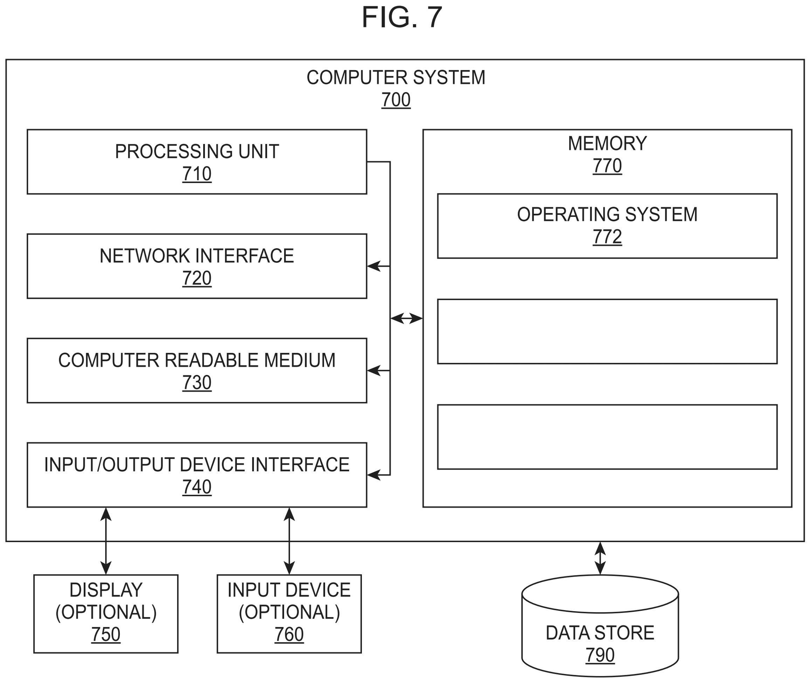

The excitation lasers 165a-c emit light in the form of a laser beam. The wavelengths of the laser beams emitted from excitation lasers 165a-165c are 488 nm, 633 nm, and 325 nm, respectively, in the example system of FIG. 7. The laser beams are first directed through one or more of beam splitters 175a and 175b. Beam splitter 175a transmits light at 488 nm and reflects light at 633 nm. Beam splitter 175b transmits UV light (light with a wavelength in the range of 10 to 400 nm) and reflects light at 488 nm and 633 nm.

The laser beams are then directed to a focusing lens 180, which focuses the beams onto the portion of a fluid stream where particles of a sample are located, within the flow cell 185. The flow cell 185 is part of a fluidics system which directs particles, typically one at a time, in a stream to the focused laser beam for interrogation. The flow chamber can comprise a flow cell in a benchtop cytometer or a nozzle tip in a stream-in-air cytometer.

The light from the laser beam(s) interacts with the particles in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. Light detection system 191 includes light detection modules 171a-171e. The fluorescence emissions as well as the diffracted light, refracted light, reflected light, and scattered light may be routed to one or more of the forward-scatter photodetector 193 and light detection modules 171a-171e. An optical adjustment component (such as, for example, a multi-modal notch filter or a beam splitter) present in light collection tube 166 splits the beam of light received from flow cell 185 into first and second beams of light. Optical collection components, i.e., first fiber optic cable 173a and second fiber optic cable 173b, convey particle-modulated light from received from flow cell 185 to first and second light receivers 172a and 172b, respectively, i.e., first fiber optic cable 173a conveys the first beam of light to first light receiver 172a, and second fiber optic cable 173b conveys the second beam of light to second light receiver 172b.

The forward-scatter photodetector 193 is positioned slightly off axis from the direct beam through the flow cell and is configured to detect diffracted light, the excitation light that travels through or around the particle in mostly a forward direction. The intensity of the light detected by the forward-scatter photodetector is dependent on the overall size of the particle. The forward-scatter photodetector can include a photodiode. First light detection module 171d ultimately receives the first beam of light from first light receiver 172a and is configured to detect small particle light scatter using a small particle detection. First light detection module 171d is also configured a side-scatter photodetector (i.e., includes a side-scatter detector) to detect refracted and reflected light from the surfaces and internal structures of particles, where such light tends to increase with increasing particle complexity of structure. The small particle detector can include an avalanche photodiode (APD), and the side scatter detection can include photomultiplier tubes. The signals detected at the forward-scatter photodetector 193, the small particle detector and the side scatter detector of the first light detection module 171d as well as the photodetectors in other light detection modules 171a, 171b, 171c, 171e can be converted to electronic signals (voltages) by the photodetectors. This data can provide information about the sample.

One of skill in the art will recognize that a flow cytometer in accordance with an embodiment of the present invention is not limited to the flow cytometer depicted in FIG. 1G, but can include any flow cytometer known in the art. For example, a flow cytometer may have any number of lasers, beam splitters, filters, and photodetectors at various wavelengths and in various different configurations.

During use, cytometer operation is controlled by a controller/processor 190, and the measurement data from the photodetectors can be stored in the memory 195 and processed by the controller/processor 190. Although not shown explicitly, the controller/processor 190 is coupled to the photodetectors to receive the output signals therefrom, and may also be coupled to electrical and electromechanical components of the flow cytometer 192 to control the lasers, fluid flow parameters, and the like. Input/output (I/O) capabilities 197 may be provided also in the system. The memory 195, controller/processor 190, and I/O 197 may be entirely provided as an integral part of the flow cytometer 192. In such an embodiment, a display may also form part of the I/O capabilities 197 for presenting experimental data to users of the cytometer 192. Alternatively, some or all of the memory 195 and controller/processor 190 and I/O capabilities may be part of one or more external devices such as a general purpose computer. In some embodiments, some or all of the memory 195 and controller/processor 190 can be in wireless or wired communication with the cytometer 192. The controller/processor 190 in conjunction with the memory 195 and the I/O 197 can be configured to perform various functions related to the preparation and analysis of a flow cytometer experiment.

Different fluorescent molecules used for a flow cytometer experiment will emit light in their own characteristic wavelength bands. The particular fluorescent labels used for an experiment and their associated fluorescent emission bands may be selected to generally coincide with the filter windows of the photodetectors. The I/O 197 can be configured to receive data regarding a flow cytometer experiment having a panel of fluorescent labels and a plurality of cell populations having a plurality of markers, each cell population having a subset of the plurality of markers. The I/O 197 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 195. The controller/processor 190 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

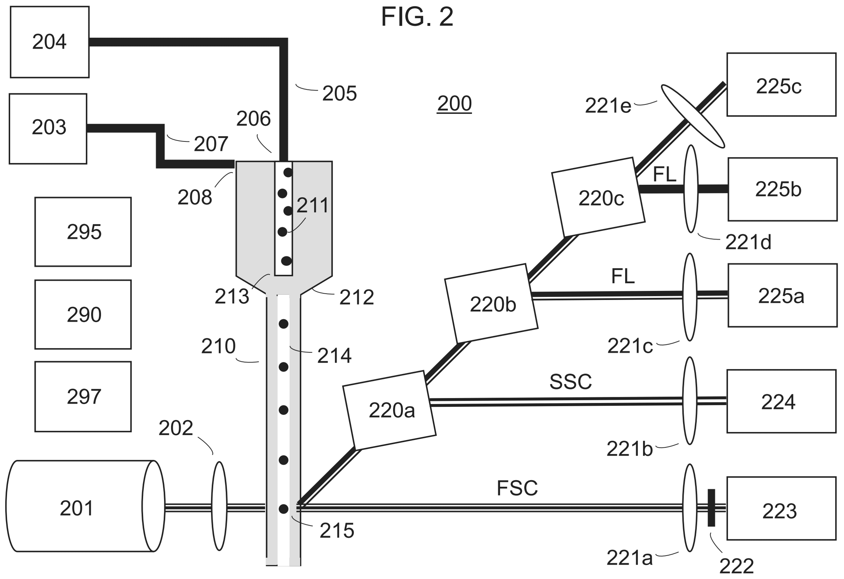

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in FIG. 2, but can include any flow cytometer known in the art. For example, a flow cytometer may have any number of lasers, beam splitters, filters, and detectors at various wavelengths and in various different configurations. For example, while the embodiment of FIG. 2 shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

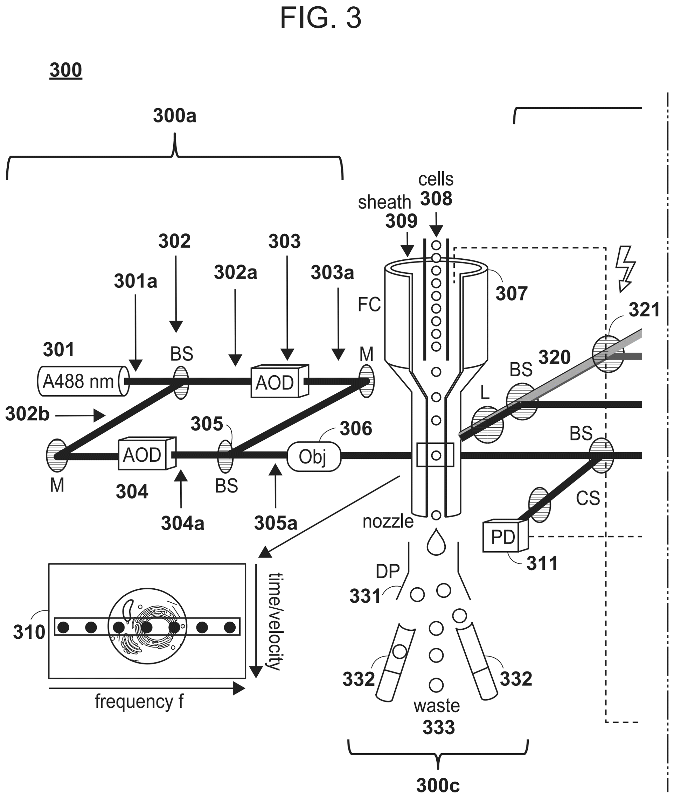

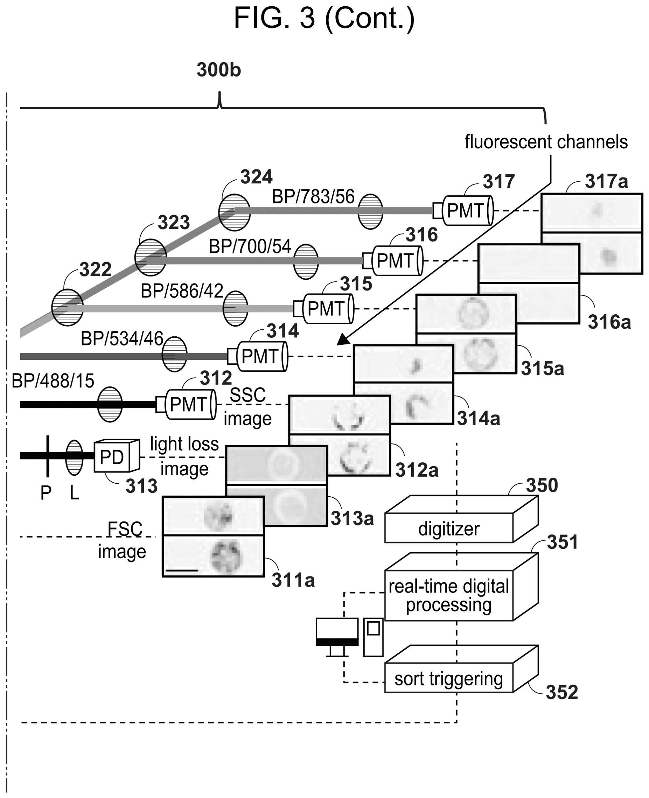

In certain embodiments, systems are a fluorescence imaging using radiofrequency tagged emission image-enabled particle sorter, such as depicted in **FIG. 3****.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017, the disclosure of which is incorporated herein by reference. In certain embodiments, sorting component 300c includes a sort decision module having a plurality of sort decision units, such as those described in U.S. Patent Publication No. 2020/0256781, the disclosure of which is incorporated herein by reference.

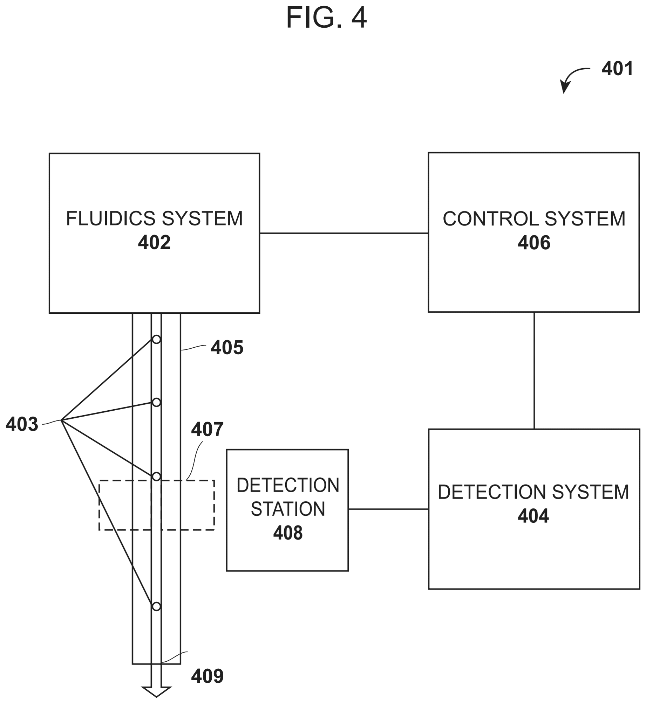

In some embodiments, systems are particle analyzers where the particle analysis system 401 **(****FIG. 4****)** can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

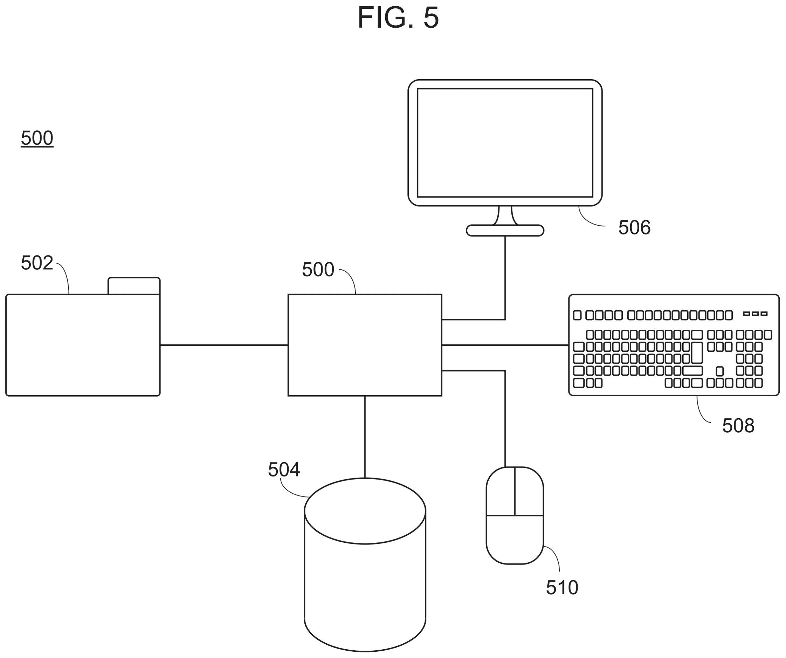

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown **in** **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

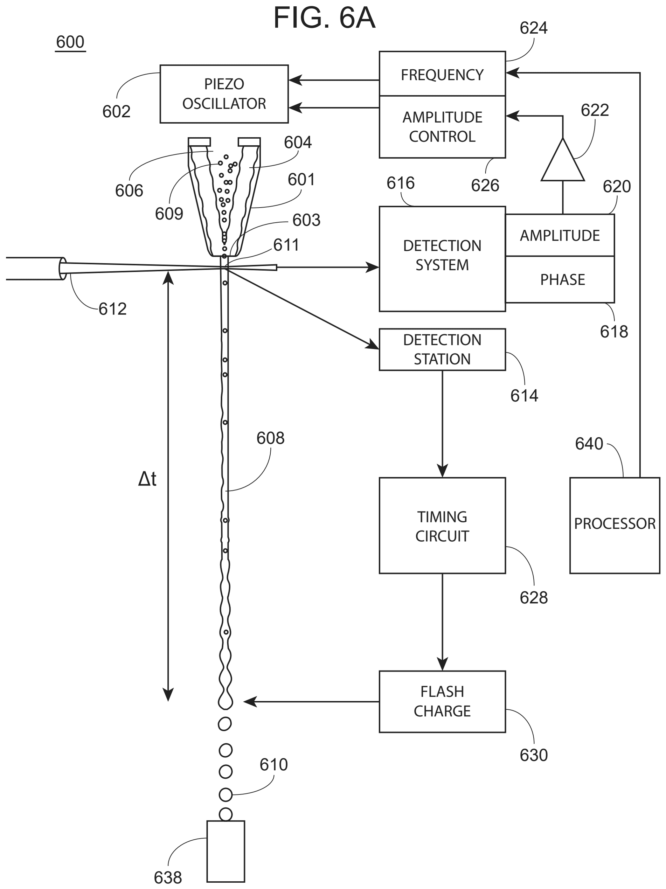

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

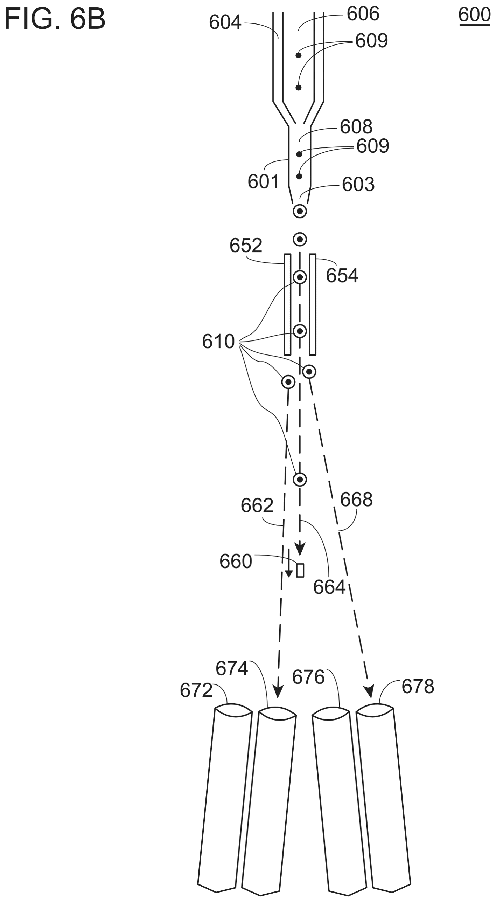

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

### METHODS

Aspects of the disclosure also include methods comprising: (a) introducing a sample into a system according to embodiments of the disclosure and (b) flow cytometrically analyzing small particles of the sample. Some embodiments further comprise obtaining a result from the system providing information as to whether small particles are present in the sample. Other embodiments further comprise: flowing the sample in a flow stream in an interrogation field; and irradiating the sample in the flow stream in the interrogation field with light.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### COMPUTER-CONTROLLED SYSTEMS

Aspects of the present disclosure further include computer-controlled systems, where the systems include one or more computers for complete automation or partial automation. In some embodiments, systems include a computer having a non-transitory computer readable storage medium with a computer program stored thereon, where the computer program when loaded on the computer includes instructions for analyzing data from one or more light detection systems described herein.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### KITS

Aspects of the invention further include kits, where kits include one or more of the small particle light detection modules as described herein. In some embodiments, kits include a first optical fiber or a second optical fiber (where the diameter of the first optical fiber is smaller than the diameter of the second optical fiber) or other components or aspects of CWD light detection subsystems, such as a second light detection module. In certain instances, kits can include one or more assay components (e.g., labeled reagents, buffers, etc., such as described above). In some instances, the kits may further include a sample collection device, e.g., a lance or needle configured to prick skin to obtain a whole blood sample, a pipette, etc., as desired.

The various assay components of the kits may be present in separate containers, or some or all of them may be pre-combined. For example, in some instances, one or more components of the kit, e.g., each deflection plate of a pair of deflection plates of a droplet deflector, are present in a sealed pouch, e.g., a sterile foil pouch or envelope.

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject light detection systems, light detection modules, methods and computer systems find use in a variety of applications where it is desirable to detect and, in some cases, analyze or sort particle components in a sample in a fluid medium, such as a biological sample, where such detected particles are small particles, such as, for example particles with diameter of approximately 80 nm; i.e., embodiments can achieve 80 nm resolution using avalanche photodiode detectors. Embodiments of the invention find use where it is desirable to provide a flow cytometer with improved cell sorting accuracy, enhanced particle collection, expanded particle analytics or collection, i.e., small particle detection.

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

The following is presented by way of example and not by way of limitation:

### EXPERIMENTAL

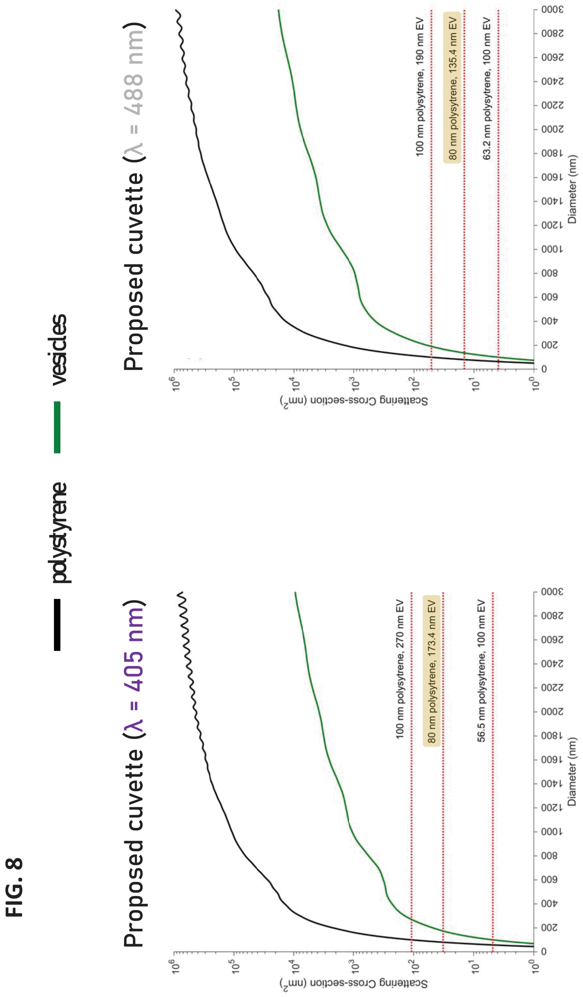

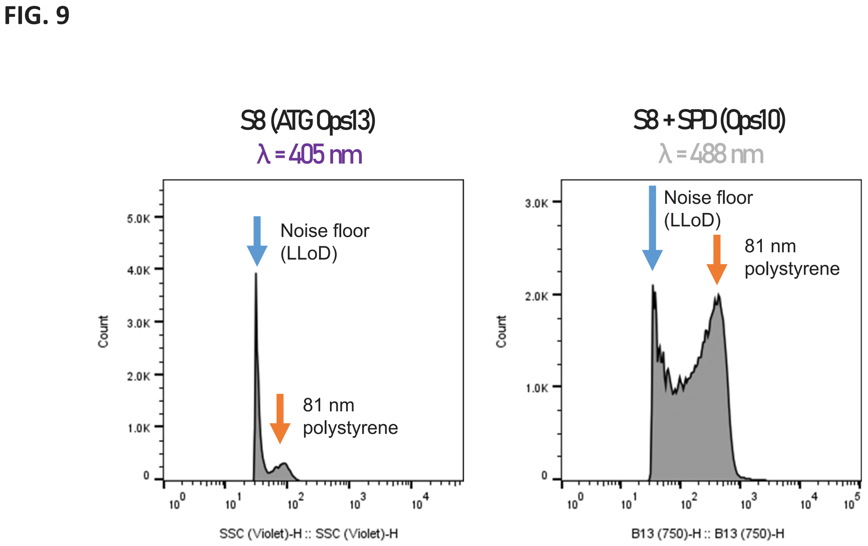

**FIG. 8** presents theoretical results related to detecting small particles using embodiments of the present disclosure. The light scattering data of polystyrene particles as well as vesicles using violet light at wavelength 405 nm and blue light with wavelength 488 nm. The theoretical results indicate that as the diameter of a cuvette increases, the scattering cross-section area increases. Results related to 80 nm polystyrene particles illuminated with each of violet and blue light are shown as horizontal lines. **FIG.** 9 shows empirical results comparing an existing system (S8 (ATG Ops13) against an embodiment according to the present disclosure (S8 + SPD (Ops10)). The empirical results indicate improved ability of the embodiment according to the present disclosure to detect small particles, specifically, 81 nm polystyrene particles.

Notwithstanding the appended claims, the disclosure is also defined by the following clauses:
1. A light detection system for small particle detection, the light detection system comprising:
   an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell;
   a clustered wavelength division (CWD) light detection subsystem comprising a first light receiver configured to convey the first beam of light to a first light detection module and a second light receiver configured to convey the second beam of light to a second light detection module, wherein the first light detection module comprises a small particle detector;
   a first optical fiber configured to convey the first beam of light from the optical adjustment component to the first light receiver of the CWD light detection subsystem; and
   a second optical fiber configured to convey the second beam of light from the optical adjustment component to the second light receiver of the CWD light detection subsystem.
2. The light detection system according to clause 1, wherein the optical adjustment component comprises a beam splitter or a multi-modal notch filter.
3. The light detection system according to any of the preceding clauses, wherein the optical adjustment component is field upgradable.
4. The light detection system according to any of the preceding clauses, wherein the system is configured such that the optical adjustment component is removable.
5. The light detection system according to any of the preceding clauses, wherein the system further comprises an aperture located between the optical adjustment component and the flow cell.
6. The light detection system according to any of the preceding clauses, wherein the optical adjustment component is configured to convey the first beam of light directly onto the first fiber and to convey the second beam of light directly onto the second fiber.
7. The light detection system according to any of the preceding clauses, wherein the diameter of the first optical fiber is smaller than the diameter of the second optical fiber.
8. The light detection system according to any of the preceding clauses, wherein a diameter of the first optical fiber is configured as an aperture dimensioned for side scatter light.
9. The light detection system according to any of the preceding clauses, wherein a diameter of the first optical fiber is configured as an aperture dimensioned for small particle side scatter light.
10. The light detection system according to any of the preceding clauses, wherein the first optical fiber has a diameter of 200 µm.
11. The light detection system according to any of the preceding clauses, wherein the first optical fiber comprises a fiber bend.
12. The light detection system according to any of the preceding clauses, wherein the fiber bend is an approximately 90-degree bend of the first optical fiber.
13. The light detection system according to any of the preceding clauses, wherein a diameter of the second optical fiber is configured as an aperture dimensioned for fluorescent light.
14. The light detection system according to any of the preceding clauses, wherein the second optical fiber has a diameter of 800 µm.
15. The light detection system according to any of the preceding clauses, wherein the first light detection module further comprises a side scatter detector.
16. The light detection system according to clause 15, wherein the first light detection module comprises a second beam splitter configured to split the first beam of light into third and fourth beams of light.
17. The light detection system according to clause 16, wherein the first light detection module is configured to convey the third beam of light to the small particle detector and to convey the fourth beam of light to the side scatter detector.
18. The light detection system according to any of the preceding clauses, wherein the small particle detector comprises an avalanche photo diode.
19. The light detection system according to any of the preceding clauses, wherein the first light detection module further comprises an optical component configured to convey light having a predetermined sub-spectral range for detection.
20. The light detection system according to clause 19, wherein the optical component comprises a bandpass filter.
21. The light detection system according to clause 19, wherein the optical component comprises a dichroic mirror.
22. The light detection system according to any of the preceding clauses, wherein the second light detection module is configured to detect fluorescent light.
23. The light detection system according to any of the preceding clauses, wherein the first and second light receivers are in fixed positions relative to each other.
24. The light detection system according to any of the preceding clauses, wherein the CWD light detection subsystem comprises a plurality of wavelength separators configured to pass light from the first and second light receivers having a predetermined spectral range.
25. The light detection system according to clause 24, wherein each of the first and second light detection modules is in optical communication with a wavelength separator of the plurality of wavelength separators.
26. The light detection system according to any of clauses 24 to 25, wherein the wavelength separators are configured to convey light between each other.
27. The light detection system according to any of clauses 24 to 26, wherein the wavelength separators comprise dichroic mirrors.
28. The light detection system according to any of clauses 24 to 27, wherein the second beam of light is conveyed by a subset of the wavelength separators.
29. The light detection system according to any of the preceding clauses, wherein the first light receiver comprises a first coupler for operably attaching the first optical fiber, and the second light receiver comprises a second coupler for operably attaching the second optical fiber.
30. The light detection system according to any of the preceding clauses, wherein the first and second light receivers each comprise a beam adjuster.
31. The light detection system according to clause 30, wherein the beam adjuster is a lens.
32. The light detection system according to any of the preceding clauses, wherein the CWD light detection subsystem comprises three or more light detection modules.
33. The light detection system according to clause 32, wherein the light detection modules are arranged in a polygonal configuration.
34. The light detection system according to clause 33, wherein the polygonal configuration is a heptagonal configuration.
35. The light detection system of any of the preceding clauses, further comprising:
   a third optical fiber configured to convey a third beam of light to a third light receiver of a second CWD light detection subsystem; and
   the second CWD light detection subsystem comprises the third light receiver configured to convey the third beam of light to a third light detection module.
36. The light detection system according to clause 35, wherein a diameter of the third optical fiber is configured as an aperture dimensioned for fluorescent light.
37. The light detection system according to any of clauses 35 to 36, wherein the third optical fiber has a diameter of 800 µm.
38. The light detection system according to any of the preceding clauses, wherein the beam of light is blue light.
39. The light detection system according to any of the preceding clauses, wherein the flow cell is a flow cell of a flow cytometer.
40. The light detection system according to any of the preceding clauses, wherein the system is configured such that the optical adjustment component receives side scattered light from the flow cell.
41. The light detection system according to any of the preceding clauses, wherein the system is configured such that the optical adjustment componentreceives fluorescent light from the flow cell.
42. The light detection system according to any of the preceding clauses, wherein the optical adjustment componentis configured to receive the light beam from a light collection component in optical communication with the flow cell.
43. The light detection system according to clause 42, further comprising a plurality of picomotors operably connected to the light collection component.
44. The light detection system according to clause 43, wherein the plurality of picomotors correspond to adjustment axes.
45. The light detection system according to any of clauses 42 to 44, wherein the optical adjustment component is integrated with the light collection component.
46. The light detection system according to any of the preceding clauses, wherein the optical adjustment component is positioned a specified distance from the flow cell.
47. A small particle light detection module of a clustered wavelength division (CWD) light detection subsystem, the small particle light detection module comprising a small particle detector, wherein the small particle light detection module is configured to receive a beam of light from a light receiver.
48. The small particle light detection module according to clause 41, wherein the beam of light comprises light conveyed from a flow cell via an optical adjustment component configured to split light received from the flow cell into the beam of light and a second beam of light.
49. The small particle light detection module according to clause 41, further comprising a side scatter detector.
50. The small particle light detection module according to clause 42, further comprising a beam splitter configured to split the beam of light received from the light receiver into first and second beams of light.
51. The small particle light detection module according to clause 43, wherein the small particle light detection module is configured to convey the first beam of light to the small particle detector and to convey the second beam of light to the side scatter detector.
52. The small particle light detection module according to any of clauses 41 to 44, wherein the small particle detector comprises an avalanche photo diode.
53. The small particle light detection module according to any of clauses 41 to 45, further comprising an optical component configured to convey light having a predetermined sub-spectral range for detection.
54. The small particle light detection module according to clause 46, wherein the optical component comprises a bandpass filter.
55. The small particle light detection module according to clause 46, wherein the optical component comprises a dichroic mirror.
56. The small particle light detection module according to any of clauses 41 to 48, wherein the small particle light detection module is in optical communication with a wavelength separator configured to pass light from the light receiver having a predetermined spectral range.
57. The small particle light detection module according to any of clauses 41 to 49, wherein the light receiver is in optical communication with an optical fiber.
58. The small particle light detection module according to clause 50, wherein a diameter of the optical fiber is configured as an aperture dimensioned for side scatter light.
59. The small particle light detection module according to any of clauses 50 to 51, wherein a diameter of the optical fiber is configured as an aperture dimensioned for small particle side scatter light.
60. The small particle light detection module according to any of clauses 50 to 52, wherein the optical fiber has a diameter of 200 µm.
61. A method comprising:
   (a) introducing a sample into a system comprising:
      an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell;
      a clustered wavelength division (CWD) light detection subsystem comprising a first light receiver configured to convey the first beam of light to a first light detection module and a second light receiver configured to convey the second beam of light to a second light detection module, wherein the first light detection module comprises a small particle detector;
      a first optical fiber configured to convey the first beam of light from the optical adjustment component to the first light receiver of the CWD light detection subsystem; and
      a second optical fiber configured to convey the second beam of light from the optical adjustment component to the second light receiver of the CWD light detection subsystem; and
   (b) flow cytometrically analyzing small particles of the sample.
62. The method according to clause 61, wherein the optical adjustment component comprises a beam splitter or a multi-modal notch filter.
63. The method according to clause 61 or 62, wherein the optical adjustment component is field upgradable.
64. The method according to any of clauses 61 to 63, wherein the system is configured such that the optical adjustment component is removable.
65. The method according to any of clauses 61 to 64, wherein the system further comprises an aperture located between the optical adjustment component and the flow cell.
66. The method according to any of clauses 61 to 65, wherein the optical adjustment component is configured to convey the first beam of light directly onto the first fiber and to convey the second beam of light directly onto the second fiber.
67. The method according to any of clauses 61 to 66, wherein the diameter of the first optical fiber is smaller than the diameter of the second optical fiber.
68. The method according to any of clauses 61 to 67, further comprising obtaining a result from the system providing information as to whether small particles are present in the sample.
69. The method according to any of clauses 61 to 68, wherein the system further comprises a light source.
70. The method according to any of clauses 61 to 69, further comprising:
   flowing the sample in a flow stream in an interrogation field; and
   irradiating the sample in the flow stream in the interrogation field with light.
71. The method according to clause 70, wherein the flow cell is configured to receive light emitted from irradiating the sample in the flow stream.
72. The method according to clause 70, wherein the beam of light received from the flow cell comprises light emitted from irradiating the sample in the flow stream.
73. The method according to any of clauses 61 to 59, wherein a diameter of the first optical fiber is configured as an aperture dimensioned for side scatter light.
74. The method according to any of clauses 61 to 60 wherein a diameter of the first optical fiber is configured as an aperture dimensioned for small particle side scatter light.
75. The method according to any of clauses 61 to 61, wherein the first optical fiber has a diameter of 200 µm.
76. The method according to any of clauses 61 to 62, wherein the first optical fiber comprises a fiber bend.
77. The method according to any of clauses 61 to 63, wherein the fiber bend is an approximately 90-degree bend of the first optical fiber.
78. The method according to any of clauses 61 to 64, wherein a diameter of the second optical fiber is configured as an aperture dimensioned for fluorescent light.
79. The method according to any of clauses 61 to 65, wherein the second optical fiber has a diameter of 800 µm.
80. The method according to any of clauses 61 to 66, wherein the first light detection module further comprises a side scatter detector.
81. The method according to clause 80, wherein the first light detection module comprises a second beam splitter configured to split the first beam of light into third and fourth beams of light.
82. The method according to clause 81, wherein the first light detection module is configured to convey the third beam of light to the small particle detector and to convey the fourth beam of light to the side scatter detector.
83. The method according to any of clauses 61 to 82, wherein the small particle detector comprises an avalanche photo diode.
84. The method according to any of clauses 61 to 83, wherein the first light detection module further comprises an optical component configured to convey light having a predetermined sub-spectral range for detection.
85. The method according to clause 84, wherein the optical component comprises a bandpass filter.
86. The method according to clause 84, wherein the optical component comprises a dichroic mirror.
87. The method according to any of clauses 61 to 86, wherein the first and second light receivers are in fixed positions relative to each other.
88. The method according to any of clauses 61 to 87, wherein the CWD light detection subsystem comprises a plurality of wavelength separators configured to pass light from the first and second light receivers having a predetermined spectral range.
89. The method according to clause 88, wherein each of the first and second light detection modules is in optical communication with a wavelength separator of the plurality of wavelength separators.
90. The method according to any of clauses 88 to 89, wherein the wavelength separators are configured to convey light between each other.
91. The method according to any of clauses 88 to 90, wherein the wavelength separators comprise dichroic mirrors.
92. The method according to any of clauses 88 to 91, wherein the second beam of light is conveyed by a subset of the wavelength separators.
93. The method according to any of clauses 61 to 92, wherein the first light receiver comprises a first coupler for operably attaching the first optical fiber, and the second light receiver comprises a second coupler for operably attaching the second optical fiber.
94. The method according to any of clauses 61 to 93, wherein the first and second light receivers each comprise a beam adjuster.
95. The method according to clause 94, wherein the beam adjuster is a lens.
96. The method according to any of clauses 61 to 95, wherein the CWD light detection subsystem comprises three or more light detection modules.
97. The method according to clause 96, wherein the light detection modules are arranged in a polygonal configuration.
98. The method according to clause 97, wherein the polygonal configuration is a heptagonal configuration.
99. The method according to any of clauses 61 to 98, wherein the system further comprises:
   a third optical fiber configured to convey a third beam of light to a third light receiver of a second CWD light detection subsystem; and
   the second CWD light detection subsystem comprises the third light receiver configured to convey the third beam of light to a third light detection module.
100. The method according to clause 99, wherein a diameter of the third optical fiber is configured as an aperture dimensioned for fluorescent light.
101. The method according to any of clauses 99 to 100, wherein the third optical fiber has a diameter of 800 µm.
102. The method according to any of clauses 61 to 101, wherein the beam of light is blue light.
103. The method according to any of clauses 61 to 102, wherein the flow cell is a flow cell of a flow cytometer.
104. The method according to any of clauses 61 to 103, wherein the system is configured such that the beam splitter receives side scattered light from the flow cell.
105. The method according to any of clauses 61 to 104, wherein the system is configured such that the beam splitter receives fluorescent light from the flow cell.
106. The method according to any of clauses 61 to 105, wherein the beam splitter is configured to receive the light beam from a light collection component in optical communication with the flow cell.
107. The method according to clause 106, wherein the system further comprises a plurality of picomotors operably connected to the light collection component.
108. The method according to clause 107, wherein the plurality of picomotors correspond to adjustment axes.
109. The method according to any of clauses 106 to 108, wherein the beam splitter is integrated with the light collection component.
110. The method according to any of clauses 61 to 109, wherein the beam splitter is positioned a specified distance from the flow cell.
111. A kit comprising:
   a small particle light detection module of a clustered wavelength division (CWD) light detection subsystem, the small particle light detection module comprising a small particle detector, wherein the small particle light detection module is configured to receive a beam of light.
112. The kit according to clause 111, further comprising:
   an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell.
113. The kit according to clause 111, wherein the optical adjustment component comprises a beam splitter or a multi-modal notch filter.
114. The kit according to any of clauses 111 to 113, further comprising a first optical fiber configured to convey the beam of light to the small particle light detection module.
115. The kit according to any of clauses 111 to 114, wherein a diameter of the first optical fiber is configured as an aperture dimensioned for side scatter light.
116. The kit according to any of clauses 111 to 115, wherein a diameter of the first optical fiber is configured as an aperture dimensioned for small particle side scatter light.
117. The kit according to any of clauses 111 to 116, wherein the first optical fiber has a diameter of 200 µm.
118. The kit according to any of clauses 111 to 117, wherein the small particle light detection module further comprises a side scatter detector.
119. The kit according to any of clauses 111 to 118, further comprising a second light detection module.
120. The kit according to clause 119, further comprising a second optical fiber configured to convey a second beam of light to the second light detection module, wherein the diameter of the first optical fiber is smaller than the diameter of the second optical fiber.
121. The kit according to clause 120, wherein a diameter of the second optical fiber is configured as an aperture dimensioned for fluorescent light.
122. The kit according to any of clauses 120 to 121, wherein the second optical fiber has a diameter of 800 µm.
123. The kit according to any of clauses 111 to 122, wherein the small particle detector comprises an avalanche photodiode.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

**1.** A light detection system for small particle detection, the light detection system comprising:
an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell;
a clustered wavelength division (CWD) light detection subsystem comprising a first light receiver configured to convey the first beam of light to a first light detection module and a second light receiver configured to convey the second beam of light to a second light detection module, wherein the first light detection module comprises a small particle detector;
a first optical fiber configured to convey the first beam of light from the optical adjustment component to the first light receiver of the CWD light detection subsystem; and
a second optical fiber configured to convey the second beam of light from the optical adjustment component to the second light receiver of the CWD light detection subsystem.

**2.** The light detection system according to claim 1, wherein the optical adjustment component comprises a beam splitter or a multi-modal notch filter.

**3.** The light detection system according to any of the preceding claims, wherein the optical adjustment component is field upgradable.

**4.** The light detection system according to any of the preceding claims, wherein the system is configured such that the optical adjustment component is removable.

**5.** The light detection system according to any of the preceding claims, wherein the system further comprises an aperture located between the optical adjustment component and the flow cell.

**6.** The light detection system according to any of the preceding claims, wherein the optical adjustment component is configured to convey the first beam of light directly onto the first fiber and to convey the second beam of light directly onto the second fiber.

**7.** The light detection system according to any of the preceding claims, wherein the diameter of the first optical fiber is smaller than the diameter of the second optical fiber.

**8.** The light detection system according to any of the preceding claims, wherein a diameter of the first optical fiber is configured as an aperture dimensioned for side scatter light.

**9.** The light detection system according to any of the preceding claims, wherein a diameter of the first optical fiber is configured as an aperture dimensioned for small particle side scatter light.

**11.** The light detection system according to any of the preceding claims, wherein the first light detection module further comprises a side scatter detector.

**12.** The light detection system according to claim 11, wherein the first light detection module comprises a second beam splitter configured to split the first beam of light into third and fourth beams of light.

**13.** The light detection system of any of the preceding claims, further comprising:
a third optical fiber configured to convey a third beam of light to a third light receiver of a second CWD light detection subsystem; and
the second CWD light detection subsystem comprises the third light receiver configured to convey the third beam of light to a third light detection module.

**14.** A small particle light detection module of a clustered wavelength division (CWD) light detection subsystem, the small particle light detection module comprising a small particle detector, wherein the small particle light detection module is configured to receive a beam of light from a light receiver.

**15.** A method comprising:
(a) introducing a sample into a system comprising:
an optical adjustment component configured to split a beam of light received from a flow cell into first and second beams of light, wherein the first beam of light comprises a light scattered from a particle excited within the flow cell, and wherein the second beam of light comprises a fluorescence of the particle excited within the flow cell;
a clustered wavelength division (CWD) light detection subsystem comprising a first light receiver configured to convey the first beam of light to a first light detection module and a second light receiver configured to convey the second beam of light to a second light detection module, wherein the first light detection module comprises a small particle detector;
a first optical fiber configured to convey the first beam of light from the optical adjustment component to the first light receiver of the CWD light detection subsystem; and
a second optical fiber configured to convey the second beam of light from the optical adjustment component to the second light receiver of the CWD light detection subsystem; and
(b) flow cytometrically analyzing small particles of the sample.
